# EUROPEAN PATENT APPLICATION

(11) **EP 4 331 765 A1**
(43) Date of publication of application: **06.03.2024**
(21) Application number: 23191754.3
(22) Date of filing: 16.08.2023
(51) Int. Cl.: B23K 9/095, B23K 9/10, B23K 9/32, B23K 9/127, B23K 37/02

(54) **TOOL BASED WELDING TECHNIQUE MONITORING SYSTEMS WITH DETACHABLE SENSOR MODULES**

(30) Priority: 17.08.2022 US 202263398671 P; 10.08.2023 US 202318232577
(71) Applicant: Illinois Tool Works Inc., Glenview IL 60025 (US)
(72) Inventor: BECKER, William Joshua, Glenview, 60025 (US); MUSKE, Mitchell James, Glenview, 60025 (US)
(74) Representative: HGF

(57) **Abstract**

Described herein are examples of tool based welding technique monitoring systems that provide an inexpensive, intuitive, and relatively robust way of tracking an orientation of a welding-type tool, and providing welding technique feedback based on the orientation. The system requires no sensors apart from a simple and/or relatively inexpensive sensor module that can be mounted to travel with the welding-type tool, which makes the system highly portable. Additionally, calibration of the system can be accomplished with fast, simple, intuitive calibration techniques.

## Description

### CROSS REFERENCE TO RELATED APPLICATIONS

This application claims priority to, and the benefit of, U.S. Provisional Application No. 63/398,671, filed August 17, 2022, entitled "TOOL BASED WELDING TECHNIQUE MONITORING SYSTEMS WITH DETACHABLE SENSOR MODULES," the entire contents of which are hereby incorporated by reference.

### TECHNICAL FIELD

The present disclosure generally relates to welding technique monitoring systems and, more particularly, to tool based welding technique monitoring systems with detachable sensor modules.

### BACKGROUND

Welding technique generally refers to the way in which a welding operator positions, moves, and/or manipulates a welding-type tool relative to a workpiece (and/or a welding joint of the workpiece), such as, for example, during a welding-type operation. Good welding technique can positively impact the quality of a weld. Bad welding technique can negatively impact the quality of a weld. However, it can sometimes be difficult for (e.g., less experienced) human operators to accurately judge whether welding technique is good or bad.

Limitations and disadvantages of conventional and traditional approaches will become apparent to one of skill in the art, through comparison of such systems with the present disclosure as set forth in the remainder of the present application with reference to the drawings.

### BRIEF SUMMARY

The present disclosure is directed to tool based welding technique monitoring systems, substantially as illustrated by and/or described in connection with at least one of the figures, and as set forth more completely in the claims.

These and other advantages, aspects and novel features of the present disclosure, as well as details of an illustrated example thereof, will be more fully understood from the following description and drawings.

### BRIEF DESCRIPTION OF THE DRAWINGS

FIG. 1 shows an example of a welding system, in accordance with aspects of this disclosure.
FIG. 2a shows an example of a sensor module mounted to a sensor mount that is attached to a welding-type tool of the welding system of FIG. 1, in accordance with aspects of this disclosure.
FIG. 2b shows the example sensor module of FIG. 2a dismounted from the sensor mount, in accordance with aspects of this disclosure.
FIG. 2c shows an enlarged view of the example sensor module of FIGS. 2a-2b, in accordance with aspects of this disclosure.
FIG. 3 is a block diagram showing an example welding technique monitoring system, in accordance with aspects of this disclosure.
FIG. 4 is a flow diagram illustrating an example operation of a technique monitoring process of the welding technique monitoring system of FIG. 3, in accordance with aspects of this disclosure.
FIG 5a shows an example of an initial reference frame of the sensor module of FIGS. 2a-2c relative to the welding-type tool of FIGS. 2a-2b, in accordance with aspects of this disclosure.
FIG. 5b shows an example of the welding-type tool of FIGS. 2a-2b in a known orientation, such as might occur, for example, during the technique monitoring process of FIG. 4 to allow a tool orientation vector to be defined relative to the reference frame of the sensor module of FIGS. 2a-2c, in accordance with aspects of this disclosure.
FIG. 5c shows an example of the welding-type tool of FIGS. 2a-2b in the orientation shown in FIG. 5a, with the tool orientation vector defined relative to the reference frame of the sensor module of FIGS. 2a-2c, in accordance with aspects of this disclosure.
FIGS. 6a-6b show examples of the sensor module of FIG. 2c in known orientations, such as might occur, for example, during the technique monitoring process of FIG. 4 to allow to allow edge vectors to be defined relative to the reference frame of the sensor module of FIGS. 2a-2c, in accordance with aspects of this disclosure.
FIGS. 7a-7b show examples of the sensor module of FIGS. 2a-2c positioned on a workpiece, such as might occur, for example, during the technique monitoring process of FIG. 4 to calibrate a joint of the workpiece, in accordance with aspects of this disclosure.
FIG. 8 shows an example of the welding-type tool of FIGS. 2a-2b performing a welding-type operation on a joint of the workpiece of FIG. 7b, such as might occur, for example, during the technique monitoring process of FIG. 4, in accordance with aspects of this disclosure.
FIGS. 9a-9b show example graphical user interfaces (GUIs) that might be shown during the technique monitoring process of FIG. 4, in accordance with aspects of this disclosure.

The figures are not necessarily to scale. Where appropriate, the same or similar reference numerals are used in the figures to refer to similar or identical elements. For example, reference numerals utilizing lettering (e.g., workpiece 122a, workpiece 122b) refer to instances of the same reference numeral that does not have the lettering (e.g., workpieces 122).

### DETAILED DESCRIPTION

Some examples of the present disclosure relate to a tool based welding technique monitoring system with a detachable sensor module. In some examples, the tool based technique monitoring system monitors an orientation of a welding-type tool using sensor data detected by the sensor module when the sensor module is mounted to the welding-type tool. In some examples, the technique monitoring system uses the tracked orientation of the welding-type tool, along with the joint characteristic information, to determine, and/or provide feedback with respect to, real-time welding technique parameters (e.g., work angle, travel angle, travel direction, travel speed, push/pull, etc.). In some examples, the tool based welding technique monitoring system obtains the joint characteristic data using sensor data detected by the sensor module when the sensor module is dismounted from the welding-type tool.

The tool based welding technique monitoring system is valuable because it is relatively inexpensive and highly portable. The sensor module can travel with the welding-type tool, and no additional sensors are required. The sensor module can also be detached for safe storage and/or use with another welding-type tool. The detachability of the sensor module also allows the technique monitoring system to support horizontal, vertical, and sloped joints using simple calibration procedures. The calibration procedures required to obtain the joint information simply require the operator to place the detached sensor module against the workpiece and provide an input, which is relatively fast and easy. Such advantages can add substantial value to any welding system.

Some examples of the present disclosure relate to a method, comprising: determining, via processing circuitry, a first joint characteristic vector and a second joint characteristic vector based on first sensor data detected during a first time period by a sensor module that is attachable to, and detachable from, a welding-type tool, the sensor module being detached from the welding-type tool during the first time period; tracking, during a second time period, via the processing circuitry, a tool orientation of the welding-type tool using second sensor data detected by the sensor module during the second time period, the sensor module being attached to the welding-type tool during the second time period; and identifying, via the processing circuitry, a welding technique parameter value based on the tool orientation of the welding-type tool and the first or second joint characteristic vector.

In some examples, determining the first joint characteristic vector and the second joint characteristic vector comprises: identifying the first joint characteristic vector as being parallel to a first edge of a housing of the sensor module in response to a calibration input; and identifying the second joint characteristic vector as being parallel to a second edge of the housing in response to the calibration input. In some examples, the method further comprises identifying the second joint characteristic vector as extending in a first direction parallel to the second edge or in a second direction, opposite the first direction, based on an input received via a user interface or sensor data detected by the sensor module during a third time period. In some examples, the sensor module comprises a first protrusion and a second protrusion extending from a wall of the housing, the second edge comprising a line extending between a first point on the periphery of the first protrusion and a second point on the periphery of the second protrusion.

In some examples, the first or second protrusion comprises a connector configured to connect with a complementary connector of a mounting device that is attached to the welding-type tool. In some examples, the sensor module comprises a housing having a connector configured to connect with a complementary connector of a mounting device that is attached to, or integrated with, the welding-type tool, the sensor module being toollessly attachable to, and detachable from, the mounting device using the connection between the connector of the sensor module and the complementary connector of the mounting device. In some examples, the sensor module comprises a rechargeable battery, and the mounting device comprises a battery recharger configured to recharge the rechargeable battery.

In some examples, the method further comprises determining, via the processing circuitry, whether the sensor module is attached to the mount of the welding-type tool based on mount data detected by a mount sensor of the sensor module or the mount, and in response to determining the sensor module is attached to the mount of the welding-type tool, providing feedback, via a user interface, based on the welding technique parameter value. In some examples, the method further comprises determining, via the processing circuitry, whether the sensor module is attached to the mount of the welding-type tool based on mount data detected by a mount sensor of the sensor module or the mount, and preventing initiation of a welding-type operation in response to determining the sensor module is not attached to the mount of the welding-type tool. In some examples, the welding technique parameter value comprises a work angle value or a travel angle value of the welding-type tool, the sensor module comprises an inertial measurement unit comprising an accelerometer, a gyroscope, or a magnetometer, and the sensor data comprises data detected by the inertial measurement unit.

Some examples of the present disclosure relate to a tool tracking system, comprising: a sensor module, comprising: a housing configured to be removably attached to a welding-type tool, and an inertial measurement unit (IMU) positioned within the housing; and a non-transitory computer readable medium comprising machine readable instructions which, when executed by a processor, cause the processor to: determine a first joint characteristic vector and a second joint characteristic vector based on first sensor data detected during a first time period by the sensor module, the sensor module being detached from the welding-type tool during the first time period, track, in real time during a second time period, a tool orientation of the welding-type tool using second sensor data detected by the sensor module during the second time period, the sensor module being attached to the welding-type tool during the second time period, and identify a welding technique parameter value based on the tool orientation of the welding-type tool and the first or second joint characteristic vector.

In some examples, determining the first joint characteristic vector and the second joint characteristic vector comprises: identifying the first joint characteristic vector as being parallel to a first edge of a housing of the sensor module in response to a calibration input, and identifying the second joint characteristic vector as being parallel to a second edge of the housing in response to the calibration input. In some examples, the non-transitory computer readable medium further comprises machine readable instructions which, when executed by a processor, cause the processor to identify the second joint characteristic vector as extending in a first direction parallel to the second edge or in a second direction, opposite the first direction, based on an input received via a user interface or sensor data detected by the sensor module during a third time period. In some examples, the sensor module comprises a first protrusion and a second protrusion extending from a wall of the housing, the second edge comprising a line extending between a first point on the periphery of the first protrusion and a second point on the periphery of the second protrusion.

In some examples, the system further comprises a sensor mount integrated with, or configured for attachment to, the welding-type tool, the first or second protrusion comprising a connector configured to connect with a complementary connector of the sensor mount. In some examples, the system further comprises a sensor mount integrated with, or configured for attachment to, the welding-type tool, the sensor module comprising a housing having a connector configured to connect with a complementary connector of the mounting device, the sensor module being toollessly attachable to, and detachable from, the mounting device using the connection between the connector of the sensor module and the complementary connector of the mounting device. In some examples, the sensor module comprises a rechargeable battery, and the sensor mount comprises a battery recharger configured to recharge the rechargeable battery.

In some examples, the sensor mount further comprises a mount sensor, and the non-transitory computer readable medium further comprises machine readable instructions which, when executed by a processor, cause the processor to: determine whether the sensor module is attached to the sensor mount based on mount data detected by the mount sensor, and in response to determining the sensor module is attached to the sensor mount, provide feedback, via a user interface, based on the welding technique parameter value. In some examples, the non-transitory computer readable medium further comprises machine readable instructions which, when executed by a processor, cause the processor to prevent initiation of a welding-type operation in response to determining the sensor module is not attached to the sensor mount. In some examples, the welding technique parameter value comprises a work angle value or a travel angle value of the welding-type tool, the inertial measurement unit comprises an accelerometer, a gyroscope, or a magnetometer, and the sensor data comprises data detected by the inertial measurement unit.

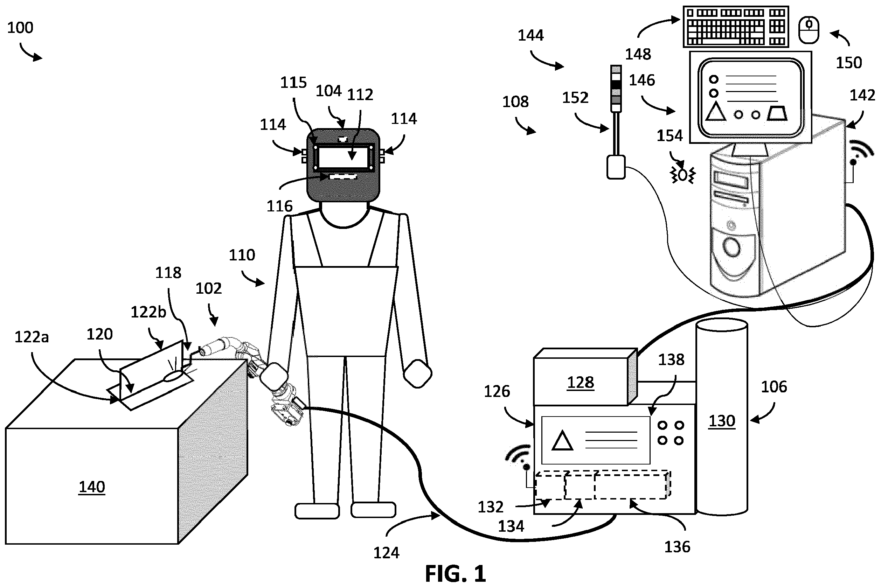

FIG. 1 shows an example welding system 100. As shown, the welding system 100 includes a welding-type tool 102, welding helmet 104, welding-type equipment 106, and computing system 108.

While shown as a welding torch or gun configured for gas metal arc welding (GMAW) in the example of FIG. 1, in some examples, the welding-type tool 102 may instead be a different kind of welding-type tool 102. For example, the welding-type tool 102 may be an electrode holder (i.e., stinger) configured for shielded metal arc welding (SMAW), a torch and/or filler rod configured for gas tungsten arc welding (GTAW), a welding gun configured for flux-cored arc welding (FCAW), and/or a plasma cutter. While shown as a live welding-type tool 102 in the example of FIG. 1, in some examples, the welding-type tool 102 may be a mock welding-type tool, and/or be configured for mock (as opposed to live) welding-type operations, such as for (e.g., virtual/augmented reality) weld training.

In the example of FIG. 1, the welding-type tool 102 is shown being held by an operator 110 wearing the welding helmet 104. In the example of FIG. 1, the welding helmet 104 includes a helmet display screen 112, helmet user interface (UI) devices 114, helmet sensors 105, and helmet circuitry 116.

In some examples, the helmet UI devices 114 may include knobs, buttons, levers, switches, touch screens, microphones, speakers, haptic devices, lights (e.g., LEDs), eye trackers, and/or other appropriate helmet UI devices 114. In some examples, the helmet sensors 105 may include optical, camera, infra-red, heat, ultrasonic, electromagnetic, and/or other appropriate sensors. In some examples, the helmet sensors 105 may be used to determine whether a (e.g., live) welding-type operation is taking place (e.g., via measurement of accompanying light, heat, sound, electromagnetic fields, etc.).

While shown on the outside of the welding helmet 104 in the example of FIG. 1, in some examples, one or more of the helmet UI devices 114 and/or helmet sensors 105 may be positioned within the welding helmet 102. In some examples, the helmet display screen 112 may be considered part of the helmet UI devices 114. In some examples, the helmet UI devices 114 and/or helmet sensors 105 may be electrical communication with the helmet circuitry 116.

In some examples, the helmet circuitry 116 may include helmet processing circuitry, helmet memory circuitry, helmet UI circuitry, and/or helmet communication circuitry. In some examples, the helmet UI circuitry may drive the helmet UI devices 114. In some examples, the welding helmet 104 may communicate with one or more external devices via one or more signals sent or received by the helmet communication circuitry.

In the example of FIG. 1, the welding-type tool 102 is shown applying a welding arc 118 to a j oint 120 between two workpieces 122 (e.g., to weld the workpieces together at the joint 120). As shown, the welding-type tool 102 is connected to a welding cable 124 that leads to, and puts the welding-type tool 102 in electrical communication with, the welding-type equipment 106. In some examples, welding-type power (and/or consumables) for the welding arc 118 may be provided to the welding-type tool 102, by the welding-type equipment 106, via the welding cable 124. In some examples, the welding-type tool 102 may transmit one or more (e.g., trigger) signals to the welding-type equipment 106 when activated (e.g., via the welding cable 124), and the welding-type equipment 106 may provide the welding-type power (and/or consumables) for the arc 118 in response.

In the example of FIG. 1, the welding-type equipment 106 comprises a welding-type power supply 126, wire feeder 128, and gas supply 130. In some examples, the wire feeder 128 may be configured to feed wire to the welding-type tool 102 (e.g., via welding cable 124). In some examples, the gas supply 130 may be configured to route shielding gas to the welding-type tool 102 (e.g., via welding cable 124). In some examples, the power supply 126 may be configured to route welding-type power to the welding-type tool 102 (e.g., via welding cable 124).

In the example of FIG. 1, the power supply 126 includes power communication circuitry 132, power control circuitry 134, and power conversion circuitry 136 interconnected with one another. In some examples, the power supply 126 may communicate with one or more external devices via one or more signals sent or received by the power communication circuitry 132. In some examples, the power conversion circuitry 136 may be configured to receive input power (e.g., from a generator, a battery, mains power, etc.) and convert the input power to welding-type output power, such as might be suitable for use by the welding-type tool 102 for welding-type operations. In some examples, the power control circuitry 134 may be configured to control operation of the power communication circuitry 132 power conversion circuitry 136, wire feeder 128, and/or gas supply 130 (e.g. via one or more control signals) in accordance with one or more welding parameters.

In the example of FIG. 1, the welding-type equipment 106 further includes an operator interface 138. In some examples, the operator interface 138 may comprise one or more display screens, touch screens, knobs, buttons, levers, switches, microphones, speakers, lights, and/or other mechanisms through which an operator 110 may provide input to, and/or receive output from, the welding-type equipment. For example, an operator 110 may use the operator interface 138 to input one or more welding parameters (e.g., target voltage, current, wire feed speed, wire/filler type, wire/filler diameter, gas type, gas flow rate, welding-type process, material type of workpiece 122, position of welding-type process, etc.). As another example, the operator 110 may use the operator interface 138 to view and/or otherwise understand the current welding parameters of the welding-type equipment 106.

While shown as part of the power supply 126 in FIG. 1, in some examples, the operator interface 138, power control circuitry 134, and/or power communication circuitry 132 (and/or some other control/communication circuitry) may be part of the wire feeder 128 and/or gas supply 130. In some examples, the welding-type equipment 106 may be omitted entirely, or may be mock and/or simulated welding-type equipment 106, such as may be used for training, simulated, and/or mock welding-type operations. While not shown for the sake of simplicity, in some examples, the welding-type equipment 106 may also be connected to, and/or provide power to (e.g., via a cable and/or clamp), a welding bench 140, and/or the workpiece(s) 122 supported by the welding bench 140.

In the example of FIG. 1, the welding-type equipment 106 is further shown connected to a computing system 108 having a computing device 142 and several computing user interface (UI) devices 144. In the example of FIG. 1, the computing UI devices 144 include a display screen 146, a keyboard 148, a mouse 150, a stack light 152 with a variety of different (e.g., color, shape, size, etc.) lights that may be illuminated in various ways (e.g., based on one or more received signals), and a vibration device 154 that may provide vibration feedback in various ways/patterns (e.g., based on one or more received signals).

In some examples, the computing UI devices 144 may be in (e.g., wired and/or wireless) communication with the computing device 142. In some examples, the display screen 146 may be a touch screen. In some examples, the display screen 146 may include one or more speakers and/or microphones.

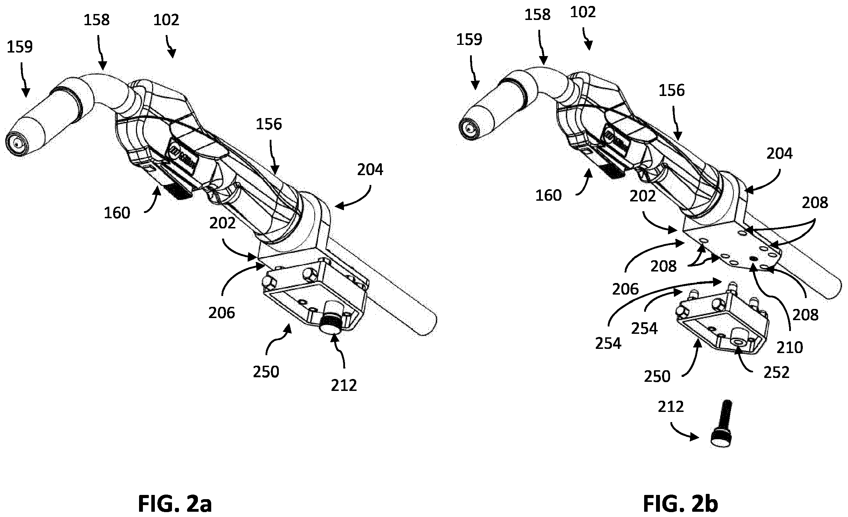

While shown as a desktop computer in the example of FIG. 1, in some examples, the computing device 142 may instead be some other appropriate computational apparatus, such as, for example, a laptop computer, a tablet computer, smart phone, other mobile device, and/or a web server. Though shown as being physically connected to the welding-type equipment 106 via a wire cable, in some examples, the computing device 142 may be in wireless communication with the welding-type equipment 106 (and/or welding helmet 104). While shown as a separate and distinct entity in the example of FIG. 1, in some examples, the computing system 108 may be implemented via the welding-type equipment 106, welding helmet 104, and/or a sensor module 250 (discussed below with respect to FIGS. 2a-2c).

FIGS. 2a-2c show views of an example sensor module 250. In the example of FIG. 2a, the sensor module 250 is attached to the welding-type tool 102 via a sensor mount 202. As shown, the sensor mount 202 is attached to a tail end of a handle 156 of the welding-type tool 102, opposite the front end of the handle 156 that is attached to a neck 158 and nozzle assembly 159. In some examples, the sensor mount 202 may instead be integrated with (e.g., the handle 156 of) the welding-type tool 102. When the sensor module 250 is mounted to the welding-type tool 102 (e.g., via the sensor mount 202), the sensor module 250 moves along with the welding-type tool 102.

In the example of FIGS. 2a-2b, the sensor mount 202 includes a tool attachment 204 connected to a mounting plate 206. As shown, the tool attachment 204 includes a portion that encircles the tail end of the handle 156 of the welding-type tool 102. In examples where the sensor mount 202 is integrated with the welding-type tool 102, the tool attachment 204 may comprise (e.g., a portion of) the handle 156 itself. In some examples, the tool attachment 204 may interface with conductors extending through the handle 156 of the welding-type tool 102. In some examples, the conductors may carry one or more trigger signals to the welding-type equipment 106 when a trigger 160 of the welding-type tool 102 is pulled. In some examples, the tool attachment 204 may detect and/or interfere with the trigger signal(s) sent from the welding-type tool 102.

In the example of FIGS. 2a-2b, the mounting plate 206 attaches to the tool attachment 204 below the welding-type tool 102. In the example of FIG. 2b, the mounting plate 206 is approximately square at one end and triangular at the opposite end, in a shape that is complementary to the shape of the sensor module 250. As shown, the mounting plate 206 includes several mount holes 208 along the periphery of the mounting plate 206 through which the sensor module 250 may be mounted to the mounting plate 206. In the example of FIG. 2b, the mounting plate 206 also includes a mounting aperture 210 near a central division between the square and triangular portions of the mounting plate 206.

In the example of FIG. 2a-2b, the sensor module 250 is secured to the sensor mount 202 using a thumbscrew 212 inserted through the mounting aperture 210 of the mounting plate 206. As shown, the thumbscrew 212 extends through a channel 252 of the sensor module 250 into the mounting aperture 210 in the mounting plate 206 of the sensor mount 202. In some examples, the channel 252 and/or mounting aperture 210 may be surrounded by screw threads configured to engage with complementary threads of the thumbscrew 212 to secure the thumbscrew 212 to the sensor module 250 and/or sensor mount 202.

In the example of FIGS. 2b-2c, several legs 254 are also shown protruding from the bottom of the sensor module 250. In some examples, the legs 254 may also help mount the sensor module 250 to the sensor mount 202. In particular, the protruding legs 254 fit into the mount holes 208 in the mounting plate 206 of the sensor mount 202. In some examples, the frictional fit of the protruding legs 254 within the mount holes 208 help to keep the sensor module 250 mounted to the sensor mount 202.

In the example of FIG. 2b, the sensor module 250 is shown dismounted from the sensor mount 202. As shown, the legs 254 have been removed from the mount holes 208, and the thumbscrew 212 removed from the channel 252 and mounting aperture 210. With both the legs 254 and thumbscrew 212 removed from the mounting plate 206, the sensor module 250 is dismounted from the sensor mount 202. In some examples, the sensor module 250 may be stored, recharged, and/or used with another welding-type tool 102 when dismounted. In some examples, the sensor module 250 may be used in one or more joint calibration procedures when dismounted from the sensor mount 202.

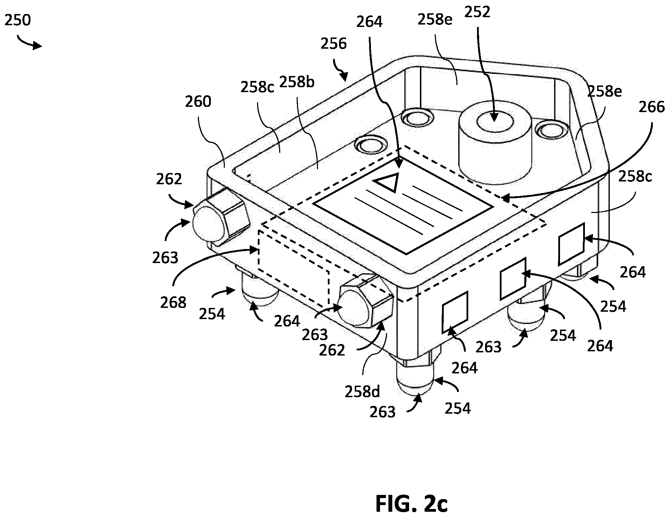

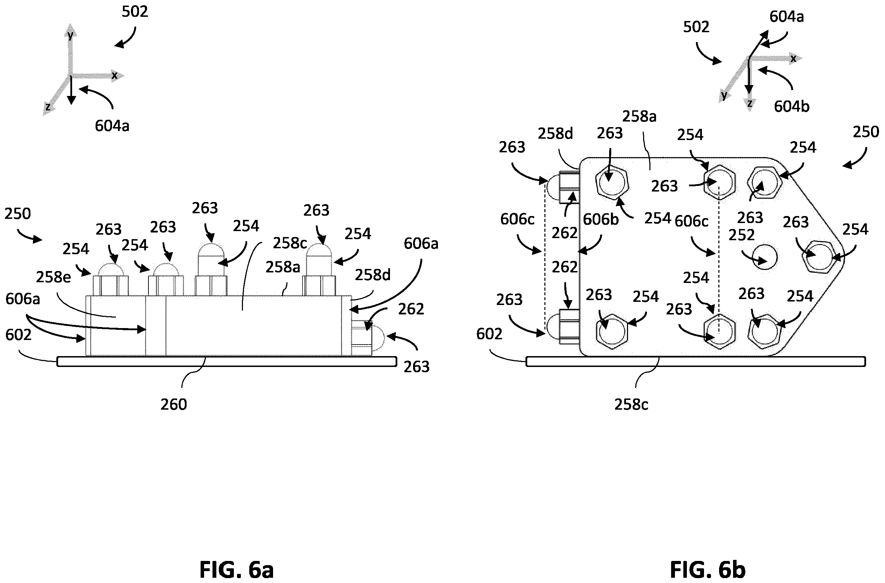

FIG. 2c shows an enlarged version of the sensor module 250 dismounted from the sensor mount 202. As shown, the sensor module 250 includes a housing 256 that is approximately square at one end and triangular at the opposite end. Legs 254 protrude from a bottom wall 258a of the housing 256 (see, e.g., FIG. 6a). As shown, the legs 254 at the square end of the sensor module 250 are longer than the legs 254 at the triangular end of the sensor module 250 (see, e.g., FIG. 6a). In some examples, the square portion of the sensor module 250 may be weighted more heavily than the triangular end, to allow the longer legs 254 to support the sensor module 250 without tipping over.

In the example of FIG. 6c, the housing 256 of the sensor module 250 further includes a top wall 258b opposite the bottom wall 258a. As shown, sidewalls 258c, rear walls 258e, and a front wall 258d of the sensor module rise above the top wall 258b, creating an upper ledge 260 that encircles a valley having the top wall 258b as its valley floor. Arms 262 protrude from the front wall 258d at the square end of the sensor module 250.

In the example of FIG. 2c, both the arms 262 and legs 254 of the sensor module 250 are capped at their ends by ball bearings 263. In some examples, the ball bearings 263 at the ends of the arms 262 and legs 254 may allow the sensor module 250 to easily move (e.g., roll) along an abutting surface, such as, for example, a workpiece 122. In some examples, some or all of the legs 254 and/or arms 262 may have different structures (e.g., instead of ball bearings 263) at their ends.

In the example of FIG. 2c, the sensor module 250 includes several module input/output (I/O) devices 264 on the module housing 256. In some examples, the module I/O devices 264 include one or more knobs, buttons, levers, switches, (e.g., touch) display screens, microphones, speakers, haptic devices, lights (e.g., LEDs), and/or other appropriate I/O devices. While some module I/O devices 264 are shown on the module housing 202 in the example of FIG. 2c, in some examples, other module I/O devices 264 may be disposed within the module housing 202. Though shown in FIG. 2a, the module I/O devices 264 are omitted in other some figures to avoid clutter.

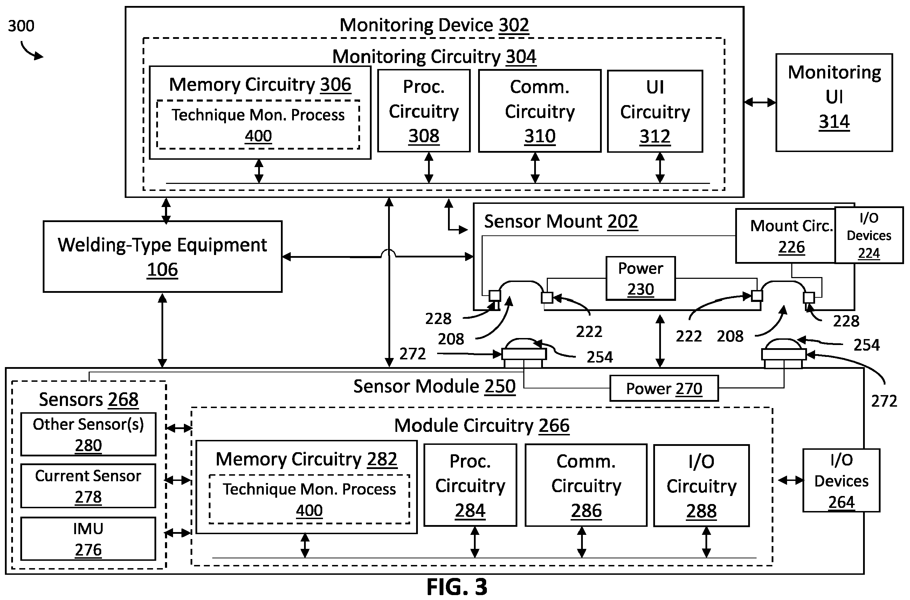

In the example of FIG. 2c, the sensor module 250 is also depicted as including module circuitry 266 and a sensor package 268 within the module housing 256. In some examples, the sensor module 250 may additionally include a module power supply 270 to power the module circuitry 266 and/or sensor package 268 (see, e.g., FIG. 3). The module power supply 270, module circuitry 266, and sensor package 268 are discussed in more detail below with respect to FIG. 3.

FIG. 3 is a block diagram showing an example welding technique monitoring system 300. As shown, the welding technique monitoring system 300 includes a monitoring device 302, the sensor module 250, the sensor mount 202, and the welding-type equipment 106, in communication with one another.

In the example of FIG. 3, the monitoring device 302 includes monitoring circuitry 304. As shown, the monitoring circuitry 304 includes monitoring memory circuitry 306, monitoring processing circuitry 308, monitoring communication circuitry 310, and monitoring UI circuitry 312 interconnected with one another via a common electrical bus.

In some examples, some or all of the monitoring device 302 may be implemented by the computing device 142 and/or welding helmet 104.While shown as a separate entity in the example of FIG. 3, in some examples, some or all of the monitoring device 302 may be implemented by the sensor module 250 and/or welding-type equipment 106.

In the example of FIG. 3, the welding technique monitoring system 300 also includes a monitoring UI 314 in communication with monitoring device 302. In some examples, the monitoring UI 314 may be implemented by the computing UI devices 144, helmet UI devices 114, operator interface 138 of the welding-type equipment 106, and/or module I/O devices 264 of the sensor module 250.

In the example of FIG. 3, the sensor module 250 includes the module I/O devices 264, module circuitry 266, module power supply 270, and sensor package 268. As shown, the sensor package 268 includes one or more inertial measurement units (IMUs) 276, current sensors 278, and/or other sensors 280. In some examples, the other sensors 280 may include one or more cameras, optical sensors, electromagnetic field (EMF) sensors, thermal sensors, acoustic sensors, optical sensors, ultrasonic sensors, and/or other appropriate sensors.

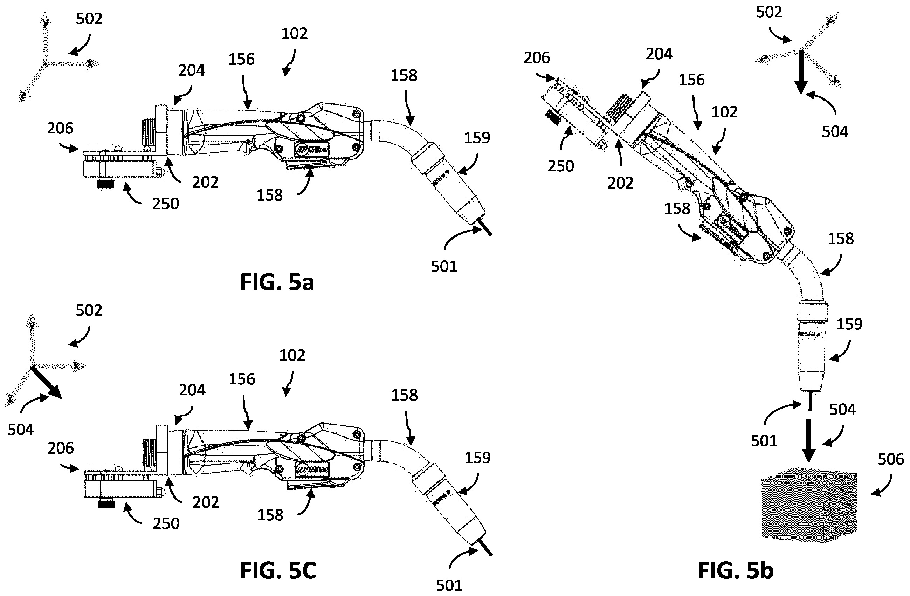

In some examples, a current sensor 278 may be a Hall Effect sensor configured to detect when current is flowing to the welding-type tool 102 (e.g., through the hollow center of the annular module housing 202). In some examples, the current sensor 278 may alternatively, or additionally, physically connect to the conductor(s) carrying current from the welding-type equipment 106 to the welding-type tool 102 (e.g., through the welding cable 124). In some examples, the current sensor 278 may alternatively, or additionally, physically connect to the conductor(s) carrying current through the welding-type tool 102 to an electrode 501 at the end of the welding-type tool 102 (see, e.g., FIGS. 5a-5c). In some examples, the current sensor 278 may alternatively, or additionally, physically connect to the conductor(s) carrying the trigger signal(s) from the welding-type tool 102 to the welding-type equipment 106. While shown as part of the sensor module 250 in the example of FIG. 3, in some examples, one or more current sensors 278 may be part of the sensor mount 202, and/or connect to the conductors through the sensor mount 202.

In some examples, the IMU(s) 276 may include one or more accelerometers, gyroscopes, and/or magnetometers (e.g., compasses). In some examples, the accelerometer(s) of the IMU(s) 276 may detect the direction(s) and/or magnitude(s) of linear acceleration(s) experienced by the sensor module 250 along all 3 axes (e.g., due to gravity, movement, etc.). In some examples, the majority of the measured acceleration will be due to the force of gravity during the relatively slow motions associated with welding-type operations.

In some examples, the gyroscope(s) and/or accelerometer(s) of the IMU(s) 276 may detect and/or measure angular motions and/or angular velocities of the sensor module 250 about all three axes. In some examples, measurements of the gyroscope(s) and/or accelerometer(s) may be integrated over time to yield absolute yaw, pitch, and/or roll angles.

In some examples, a magnetometer is used to increase the stability and accuracy of rotation measurements about a gravity vector. In some examples, data from the magnetometer(s) may be considered unreliable and/or ignored when an EMF sensor detects a significant electromagnetic field (e.g., with strength above a threshold), when the current sensor 278 detects a current above a threshold, and/or when there is some other indication (e.g., from the welding-type tool 102, welding-type equipment 106, helmet sensor(s) 115, etc.) that a (e.g., live) welding-type operation is occurring. In some examples, the magnetometer may be manually (e.g., using I/O devices 264), and/or automatically, disabled when the data from the magnetometer(s) becomes unreliable, when a welding-type operation is occurring nearby, and/or when there is a substantial electromagnetic field nearby.

In some examples, data from the gyroscope(s), accelerometer(s), and/or magnetometer may be combined using a sensor fusion technique (e.g., Complementary Filter, Kalman Filter, etc.) to yield accurate linear and/or angular motion data. In some examples where multiple IMLTs 276 are used, the data from the IMUs 276 (and/or information derived from the data) may be combined (e.g., averaged) to increase accuracy and/or alleviate the negative impact of drift. In some examples where multiple IMUs 276 are used, and the data of one IMU 276 (and/or its sensor(s)) drifts more than a threshold relative to the data of the other IMUs 276 (and/or their sensor(s)), the drifting IMU 276 (and/or its sensor(s)) may be ignored, and the sensor module 250 may continue to operate using the other IMUs 276. In some examples, when the sensor module 250 is mounted to the sensor mount 202, the sensor module 250 may track a movement and/or orientation of the welding-type tool 102 using the detections and/or measurements of the accelerometer(s), gyroscope(s), and/or magnetometer(s) of the IMU(s) 276.

In the example of FIG. 3, the module circuitry 266 includes module memory circuitry 282, module processing circuitry 284, module communication circuitry 286, and module I/O circuitry 288 interconnected with one another via a common electrical bus. As shown, the module circuitry 266 is in electrical communication with the module I/O devices 264, IMU 276, current sensor 278, and other sensors 280. While shown as separate, in some examples, some or all of the module circuitry 266 (and/or additional module circuitry 266) may be part of the IMU 276, current sensor 278, and/or other sensors 280.

While not shown for the sake of simplicity, in some examples, the module power supply 270 may be electrically connected (and/or provide power to) to the module I/O devices 264, module sensor package 268, and/or module circuitry 266. In some examples, the module power supply 270 may be configured to receive (and/or be recharged by) external power from an external source, such as, for example the sensor mount 202.

In the example of FIG. 3, the module power supply 270 is in electrical communication with electrical contacts 272 on two of the protruding legs 254 of the sensor module 250. In some examples, the module power supply 270 may receive (and/or be recharged by) external power from the sensor mount 202 through an electrical connection of the electrical contacts 272 on the protruding legs 254 with complementary electrical contacts 222 of the sensor mount 202.

In the example of FIG. 3, the sensor mount 202 has complementary electrical contacts 222 in electrical communication with a mount power supply 230 of the sensor mount 202. As shown, the complementary electrical contacts 222 are positioned around the mount holes 208 of the sensor module 250. In such positions, the complementary electrical contacts 222 will make electrical contact with the electrical contacts 272 on the protruding legs 254 when the legs 254 are received by the mount holes 208. In some examples, when the electrical contacts 272 and complementary electrical contacts 222 are connected, a circuit is formed between the mount power supply 230 and the module power supply 270, thereby allowing the module power supply 270 to be recharged by the mount power supply 230.

While two legs 254 and two mount holes 208 are shown with electrical contacts 272 and complementary electrical contacts 222 in the example of FIG. 3, in some examples, more or fewer legs 254 and/or mount holes 208 may be so configured. In some examples, the mount power supply 230 may receive power from the conductors in the welding cable 124, such as, for example, part of the power delivered to the welding-type tool 102. In some examples, the mount power supply 230 may be battery powered, and/or may receive (and/or be recharged by) power delivered through a power port (not shown).

In the example of FIG. 3, the sensor mount 202 further includes mount sensors 228 positioned around the mount holes 208. In some examples, a mount sensor 228 may be configured to detect when a protruding leg 254 is received in a mount hole 208, which may indicate mounting of the sensor module 250 to the sensor mount 202. In some examples, a mount sensor 228 may be a current sensor that detects when current is flowing through the electrical contacts 272 and/or complementary electrical contacts 222, which may indicate a completed circuit and successful connection of the sensor module 250 to the sensor mount 202. In some examples, the module current sensor 278 may also act as a mount sensor; detecting when current is flowing through the electrical contact 272 and/or complementary electrical contact 222. In some examples, a mount sensor 228 may comprise a mechanical switch, a reed switch, an optical sensor, a magnetic sensor, a near field communication (NFC) device, and/or other appropriate device. In some examples, a protruding leg 254 may include a complementary (e.g., NFC, optical, magnetic, etc.) device that allows the mount sensor 228 to detect reception of the leg 254 within the mount hole 208.

In the example of FIG. 3, the mount sensors 228 are electrically connected to mount circuitry 226. As shown, the mount circuitry 226 is connected to mount I/O devices 224. In some examples, the mount I/O devices 224 may be similar (and/or identical) to the module I/O devices 264. In some examples, the mount circuitry 226 may be similar (and/or identical) to the module circuitry 266. While not shown for the sake of simplicity, in some examples, the mount power source may be electrically connected (and/or configured to provide power) to the mount sensors 228, mount circuitry 226, and/or mount I/O devices 224.

In some examples, the monitoring UI circuitry 312 and/or module I/O circuitry 288 may comprise one or more drivers for the monitoring UI 314 and/or module I/O devices, respectively. In some examples, the monitoring UI circuitry 312 and/or module I/O circuitry 288 may be configured to generate one or more signals representative of input received via the monitoring UI 314 and/or module I/O devices, respectively, and provide the signal(s) to the bus. In some examples, the monitoring UI circuitry 312 and/or module I/O circuitry 288 may also be configured to control the monitoring UI 314 and/or module I/O devices, respectively, to generate one or more outputs in response to one or more signals (e.g., received via the bus).

In some examples, the monitoring communication circuitry 310 and/or module communication circuitry 286 may include one or more wireless adapters, wireless cards, cable adapters, wire adapters, dongles, radio frequency (RF) devices, wireless communication devices, Bluetooth devices, IEEE 802.11-compliant devices, WiFi devices, cellular devices, GPS devices, Ethernet ports, network ports, lightning cable ports, cable ports, etc. In some examples, the monitoring communication circuitry 310 and/or module communication circuitry 286 may be configured to facilitate communication via one or more wired media and/or protocols (e.g., Ethernet cable(s), universal serial bus cable(s), etc.) and/or wireless mediums and/or protocols (e.g., cellular communication, general packet radio service (GPRS), near field communication (NFC), ultra high frequency radio waves (commonly known as Bluetooth), IEEE 802.11x, Zigbee, HART, LTE, Z-Wave, WirelessHD, WiGig, etc.). In some examples, the monitoring communication circuitry 310 and/or module communication circuitry 286 may be coupled to one or more antennas to facilitate wireless communication.

In some examples, the monitoring communication circuitry 310 and/or module communication circuitry 286 may be configured to facilitate internal and/or external communications. In some examples, the monitoring communication circuitry 310 and/or module communication circuitry 286 may receive one or more signals (e.g., from each other and/or the welding-type equipment 106) decode the signal(s), and provide the decoded data to the electrical bus. As another example, the monitoring communication circuitry 310 and/or module communication circuitry 286 may receive one or more signals from the electrical bus (e.g., representative of one or more inputs received via the monitoring UI circuitry 312 and/or I/O circuitry 308) encode the signal(s), and transmit the encoded signal(s) to an external device.

In some examples, the monitoring processing circuitry 308 and/or module processing circuitry 284 may comprise one or more processors, controllers, and/or graphical processing units (GPUs). In some examples, the monitoring processing circuitry 308 and/or module processing circuitry 284 may comprise counter circuitry and/or clock circuitry. In some examples, the monitoring processing circuitry 308 and/or module processing circuitry 284 may be configured to execute machine readable instructions stored in the monitoring memory circuitry 306 and/or module memory circuitry 282.

In the example of FIG. 3, the monitoring memory circuitry 306 and module memory circuitry 282 includes (and/or stores) a welding technique monitoring process 400. The technique monitoring process 400 is shown as being part of (and/or stored in) both the monitoring memory circuitry 306 and module memory circuitry 282 to indicate that, in some examples, either or both the monitoring device 302 and/or sensor module 250 may perform part, or all, of the technique monitoring process 400. In the discussion below, the general term memory is sometimes used to refer to monitoring memory circuitry 306 and/or module memory circuitry 282 (and/or mount memory circuitry). In the discussion below, certain items and/or information is sometimes described as being included, stored, and/or recorded in memory as a shorthand for specifying that data representative of those items and/or information is included, stored, and/or recorded in memory.

In some examples, the technique monitoring process 400 may comprise machine readable instructions stored in memory and/or configured for execution by the monitoring processing circuitry 308 and/or module processing circuitry 284. In some examples, the technique monitoring process 400 may be implemented via discrete circuitry (e.g., of the monitoring processing circuitry 308, module processing circuitry 284, and/or mount processing circuitry) rather than, or in addition to, instructions stored in the monitoring memory circuitry 306 and/or module memory circuitry 282. In the discussion below, the term processing circuitry is sometimes used to refer to the monitoring processing circuitry 308, module processing circuitry 284, and/or mount processing circuitry.

While not shown in the example of FIG. 3, in some examples, the memory may also include (and/or store) machine readable instructions comprising counter and/or clock programs. In some examples, the memory may also include (and/or store) one or more of the thresholds discussed herein. In some examples, the memory may also include (and/or store) values for one or more determined, target, present, and/or past parameters, such as, for example, welding parameters (e.g., voltage, current, wire feed speed, gas flow rate, etc.), welding technique parameters (e.g., work angle, travel angle, travel speed, travel direction, etc.), weave parameters (e.g., frequency, weave width, dwell time, etc.), sensor parameters (e.g., sensor orientation reference frame, tool orientation vector, etc.), joint parameters (e.g., joint orientation vector, base plate perpendicular vector, base plate surface vector, etc.), and/or operation parameters (e.g., job type/identifier(s), operator identifier(s), weld cell identifier(s), project identifier(s), welding procedure specification (WPS) information, work order information, equipment type/identifier(s), weld number information, etc.). In some examples, one or more parameters may be associated with timestamp information, one or more other parameters, and/or other information. In some examples, the technique monitoring process 400 may use and/or update one or more of the stored parameters during operation.

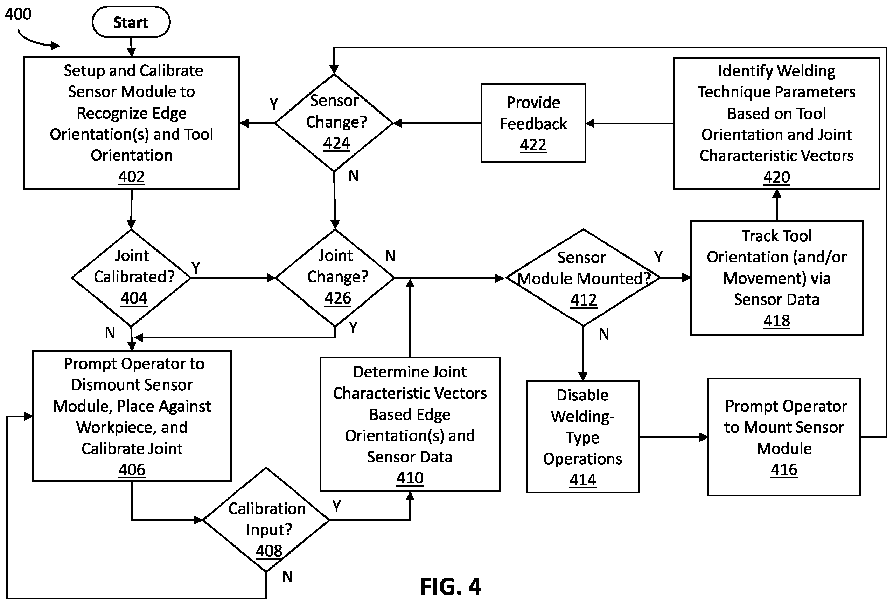

FIG. 4 is a flowchart illustrating operation of an example technique monitoring process 400. In some examples, during the technique monitoring process 400, the processing circuitry uses sensor data from the sensor module 250 (e.g., while the sensor module 250 is mounted to the sensor mount 202) to track an orientation of the welding-type tool 102. During the technique monitoring process 400, the processing circuitry may provide real-time feedback regarding welding technique parameter values based on the orientation of the welding-type tool 102.

In some examples, during the technique monitoring process 400, the processing circuitry also uses joint characteristic information to determine the welding technique parameter values. In some examples, during the technique monitoring process 400, the sensor module 250 may be dismounted from the sensor mount 202 and used in a simple calibration process to obtain the joint characteristic information necessary for determining the welding technique parameter values.

In the example of FIG. 4, the technique monitoring process 400 begins at block 402, where the processing circuitry performs certain setup procedures. In some examples, the setup procedures may include identifying certain (e.g., welding, operation, etc.) parameters at that will be used during the technique monitoring process 400. In some examples, this identification may involve input from the operator 110 (e.g., via the monitoring UI 314, module I/O devices 264, and/or mount I/O devices 224). In some examples, this identification may involve communication with the welding-type equipment 106. In some examples, certain parameters may be automatically identified based on other, previously identified, parameters. In some examples, the setup procedures of block 402 may include setting up, initiating, and/or calibrating the sensor module 250 and/or technique monitoring system 300.

In some examples, the processing circuitry may prompt the operator 110 (e.g., via the monitoring UI 314, module I/O devices 264, and/or mount I/O devices 224) to setup the sensor module 250 at block 402. For example, the processing circuitry may prompt the operator 110 to turn on the sensor module 250 (if not already turned on), and/or provide an input (e.g., via the monitoring UI 314, module I/O devices 264, and/or mount I/O devices 224) when the sensor module 250 has been turned on.

In some examples, the sensor module 250 may set (or reset) an internal reference frame 502 at block 402 (see, e.g., FIG. 5a), and save the reference frame 502 in memory. In some examples, after the sensor module 250 sets, resets, and/or saves its reference frame 502, the sensor module 250 may track changes to its reference frame 502 using the IMU(s) 276. For example, the gyroscope(s) and/or accelerometer(s) of the IMU(s) 276 of the sensor module 250 may detect and/or measure angular motions of the sensor module 250 that may impact the reference frame 502 of the sensor module 250. In some examples, the sensor module 250 may continually update its reference frame 502 based on sensor data from the IMU 276 (and/or other sensors), and/or save the updated reference frame(s) 502 in memory. In such a way, the sensor module 250 may keep track of its own orientation relative to an (e.g., arbitrary) initial orientation. In some examples, the sensor module 250 may keep timestamped records of its orientation reference frame(s) 502, and/or changes to its orientation reference frame(s) 502, over time.

FIG. 5a shows an example of a reference frame 502 of the sensor module 250 at initiation. As shown, the reference frame 502 is depicted using three arrows intersecting at a point to represent the standard three coordinate axes and (e.g., 0, 0, 0) origin point. In the example of FIG. 5a, the reference frame 502 is depicted as being similar to a reference frame of the reader to indicate that the sensor module 250 has just been initiated and has yet to experience any change in orientation (e.g., due to movement of the welding-type tool 102). However, this is just a simple example. In other examples, the reference frame 502 may be oriented differently at initiation.

In some examples, the processing circuitry may prompt the operator 110 (e.g., via the monitoring UI 314, module I/O devices 264, and/or mount I/O devices 224) to mount the sensor module 250 to the sensor mount 202, and then position the welding-type tool 102 in a particular (e.g., known) orientation at block 402. For example, the processing circuitry may prompt the operator 110 to position the welding-type tool 102 such that a nozzle 159 is pointing down towards the ground in a direction parallel to gravity (see, e.g., FIG. 5b). In such an orientation, an electrode 501 guided by the nozzle 159 is also pointing down towards the ground in a direction parallel to gravity, as well as other structures within the nozzle 159 (e.g., a contact tip). In examples where the welding-type tool 102 does not include a nozzle 159 (e.g., for stick welding and/or SMAW), the processing circuitry may prompt the operator 110 to position the welding-type tool 102 such that the electrode 501 is pointing down towards the ground in a direction parallel to gravity. In some examples, the processing circuitry may prompt the operator 110 (e.g., via the monitoring UI 314, module I/O devices 264, and/or mount I/O devices 224) to provide a particular input (e.g., via the monitoring UI 314, module I/O devices 264, and/or mount I/O devices 224) when the welding-type tool 102 is positioned in the particular (e.g., known) orientation.

In response to the input indicating the welding-type tool 102 is positioned in the particular (e.g., known) orientation, the processing circuitry may record a tool orientation vector 504 (see, e.g., FIG. 5b). In some examples, the tool orientation vector 504 may correspond to a direction parallel to the direction (e.g., an electrode 501 of) the welding-type tool 102 is pointing (e.g., towards a workpiece 122 and/or joint 120). In some examples, the tool orientation vector 504 may comprise a direction parallel to a longitudinal (and/or traveling) direction of the electrode 501, such as, for example when the electrode is within and/or extending from the nozzle 159. In some examples, the processing circuitry may record the tool orientation vector 504 as corresponding to a direction parallel to gravity (e.g., as measured by the IMU(s) 276) in response to the input.

In some examples, the processing circuitry may record the tool orientation vector 504 relative to the reference frame 502 of the sensor module 250. In some examples, recording a vector relative to the reference frame 502 of the sensor module 250 ensures that the vector always points in the same direction relative to the reference frame 502. In such examples, when the sensor module 250 is moved to a different orientation, the sensor module 250 may track the change in its own orientation (e.g., via the IMU(s) 276), and the reference frame 502 of the sensor module 250 may be changed accordingly. Because the vector was recorded relative to the reference frame 502, the orientation of the vector may also be changed to the same extent as the orientation of the reference frame 502. Thus, though the vector will no longer continue to point in the same actual direction (e.g., relative to Earth) as when originally recorded, the vector will continues to point in the same direction relative to the reference frame 502 as when originally recorded.

Therefore, once the tool orientation vector 504 is recorded relative to the reference frame 502, the tool orientation vector 504 will be reoriented to the same extent as the reference frame 502 every time the sensor module 250 is moved and/or its reference frame 502 is reoriented. In this way, once calibrated, the monitoring system 300 can always keep track of the orientation of the welding-type tool 102 by tracking the reference frame 502 of the sensor module 250 and translating changes in the orientation of the reference frame 502 to changes in the orientation of the welding-type tool 102 (and/or tool orientation vector 504).

The welding technique monitoring system 300 has no information as to the orientation of the welding-type tool 102 when the sensor module is first initiated (e.g., as shown in FIG. 5a). However, if an operator 110 positions the welding-type tool 102 in a particular (e.g., known) orientation and provides a corresponding input, as discussed above, the welding technique monitoring system 300 can get information as to the orientation of the welding-type tool 102. FIG. 5b shows an example of how the welding-type tool 102 might be positioned at block 402 so that the welding technique monitoring system 300 can get information as to the orientation of the welding-type tool 102.

In the example of FIG. 5b, the welding-type tool 102 is positioned with its nozzle 159 and electrode 501 pointing downwards in a direction parallel to gravity. A tool orientation vector 504 representative of this orientation is shown extending downwards from the nozzle 159 and electrode 501, also parallel to the direction of gravity. FIG. 5b also shows the tool orientation vector 504 extending downwards from the origin of the reference frame 502 of the sensor module 250. In some examples, the processing circuitry may record in memory the tool orientation vector 504 in relation to the reference frame 502 of the sensor module 250, and/or record some offset (and/or other information) that allows for a quick determination of the tool orientation vector 504 relative to the reference frame 502 of the sensor module 250.

In some examples, the welding-type tool 102 may be fixed and/or held in the orientation shown in FIG. 5b (or some other known orientation) during recordation of the tool orientation vector 504. In some examples, this may be easier if some structure is used to fix the welding-type tool in place and secure against movement. In the example of FIG. 5b, a calibration block 506 is shown for this purpose.

In the example of FIG. 5b, the calibration block 506 is depicted below the welding-type tool 102 with a hole sized to snugly fit the nozzle 159 of the welding-type tool 102 and secure the welding-type tool 102 against movement during calibration. In some examples, some other mechanism (e.g., clamp, stand, fixture, fasteners, etc.) may be used to secure the welding-type tool 102 in proper orientation and/or minimize movement during calibration. In some examples, any of the structures described in U.S. Patent Application No. 15/004,801, filed January 22, 2016, entitled "Manual Tool Tracking and Guidance With Inertial Measurement Unit," the contents of which are being hereby incorporated by reference in their entirety, may be used to help secure the welding-type tool 102 against movement during calibration and/or recordation of the tool orientation vector 504.

In some examples, once recorded, the tool orientation vector 504 may be used to track the orientation of the welding-type tool 102. As discussed above, the orientation of the reference frame 502 of the sensor module 250 may be tracked using the IMU(s) 276. As the tool orientation vector 504 is recorded in relation to the reference frame 502 of the sensor module 250, tracking of the orientation of the reference frame 502 may allow for tracking of the tool orientation vector 504.

The relationship between the orientation of the welding-type tool 102 and the orientation of the reference frame 502 of the sensor module 250 is exhibited in FIGS. 5a-5b. As shown, the orientation of the reference frame 502 is different in FIG. 5a as compared to FIG. 5b. In particular, the reference frame 502 in FIG. 5b is shown rotated clockwise with respect to the orientation of the reference frame 502 in FIG. 5a. The change in orientation of the reference frame 502 of the sensor module 250 between FIG. 5a and FIG. 5b is the same as the change in orientation of the welding-type tool 102 between FIG. 5a and FIG. 5b (because the sensor module 250 is mounted to the welding-type tool 102).

The relationship between the orientation of the welding-type tool 102, tool orientation vector 504, and reference frame 502 of the sensor module is exhibited in FIGS. 5a-5c. As discussed above, when the reference frame 502 of the sensor module 250 is first initiated (e.g., as shown in FIG. 5a) the welding technique monitoring system 300 has no information as to the orientation of the welding-type tool 102. However, once the welding technique monitoring system 300 is properly calibrated (e.g., in FIG. 5b), the welding technique monitoring system 300 is able to track the orientation of the welding-type tool 102 using the tool orientation vector 504. Because the tool orientation vector 504 is recorded relative to the reference frame 502 of the sensor module 250, the tool orientation vector 504 is reoriented to the same extent as the reference frame 502 every time the sensor module 250 (and/or its reference frame 502) is reoriented. FIG. 5c shows an example of how the tool orientation vector 504 is reoriented to the same extent as the reference frame 502 every time the sensor module 250 (and/or its reference frame 502) is reoriented.

In FIG. 5c, the welding-type tool 102 is shown reoriented back to the same orientation as in FIG. 5a. As the sensor module 250 is mounted to the welding-type tool 102, the sensor module 250 is also reoriented back to the same orientation as in FIG. 5a. Thus, the reference frame 502 of the sensor module 250 is identically oriented in FIG. 5a and FIG. 5c.

However, whereas in FIG. 5c, the welding technique monitoring system 300 had no information as to the orientation of the welding-type tool 102, in FIG. 5c, the monitoring system 300 has been calibrated to recognize the tool orientation vector 504. Through tracking of the tool orientation vector 504, the monitoring system 300 may track the orientation of the welding-type tool 102. In the example of FIG. 5c, the tool orientation vector 504 is shown relative to the reference frame 502 to indicate the calibration of the welding technique monitoring system 300 to recognize the tool orientation vector 504. Because the tool orientation vector 504 is recorded relative to the reference frame 502 of the sensor module 250, the tool orientation vector 504 has been reoriented to the same extent as the reference frame 502 of the sensor module 250 in FIG. 5c.

In some examples, the processing circuitry may also prompt the operator 110 (e.g., via the monitoring UI 314, module I/O devices 264, and/or mount I/O devices 224) to record and/or calibrate edge vectors 604 of the sensor module 250 at block 402 (see, e.g., FIGS. 6a-6b). As part of this calibration, the processing circuitry may prompt the operator 110 to detach the sensor module 250 from sensor mount 202 and/or position the sensor module 250 in one or more particular (e.g., known) orientations.

For example, the processing circuitry may prompt the operator 110 to position the sensor module 250 with its upper ledge 260 on a flat horizontal surface 602. This position is shown, for example, in FIG. 6a. As shown, in such a position, the legs 254 of the sensor module 250 extend upward approximately parallel to the direction of gravity (and/or the arms are approximately perpendicular to gravity). Additionally, as shown, a standing edge 606a of the sensor module 250 (e.g., formed at the intersection of the two rear walls 258e, an intersection of a rear wall 258e and a sidewall 258c, and/or an intersection of the front wall 258d and a sidewall 258c) also extends parallel to the direction of gravity.

As another example, the processing circuitry may prompt the operator 110 to position the sensor module 250 with a sidewall 258c of the sensor module 250 resting on the flat horizontal surface 602. This position is shown, for example, in FIG. 6b. As shown, in such a position, both the legs 254 and the arms 262 extend approximately perpendicular to gravity. Additionally, as shown, a front edge 606b (e.g., formed between the bottom wall 258a and front wall 258) is approximately parallel to gravity. Also, a protruding edge 606c (e.g., comprising a line extending between points farthest from a wall 258 on the periphery of each protruding arm 262 and/or capping ball bearing 263, and/or a line extending between points farthest from a wall 258 on the periphery of legs 254 aligned with the arms 262), is approximately parallel to gravity.

In some examples, the processing circuitry may prompt the operator 110 (e.g., via the monitoring UI 314, module I/O devices 264, and/or mount I/O devices 224) to provide a particular input (e.g., via the monitoring UI 314, module I/O devices 264, and/or mount I/O devices 224) when the sensor module 250 is appropriately positioned for calibration of an edge vectors 604. In some examples, the operator 110 may provide a different input for each edge vector 604, and/or otherwise specify via input which edge vector 604 is being calibrated at a particular time.

In response to input indicating the sensor module 250 is positioned in the particular (e.g., known) orientation for calibration of an edge vector 604, the processing circuitry may record a first edge vector 604a and/or second edge vector 604b as being in a direction parallel to gravity. In the example of FIG. 6a, the first edge vector 604a is shown both parallel to the direction of gravity, and parallel to the standing edge 606a of the sensor module 250. In the example of FIG. 6b, the second edge vector 604b is shown both parallel to the direction of gravity, and parallel to the front edge 606b and protruding edges 606c. In some examples, a third edge vector may be similarly recorded as parallel to an edge formed at the intersection of the bottom wall 258a and a sidewall 258c.

In the examples of FIGS. 6a-6b, the processing circuitry has recorded the edge vectors 604 relative to the reference frame 502 of the sensor module 250. In some examples, this may allow the welding technique monitoring system 300 to easily track the orientation of the edge vectors 604 by translating changes in the orientation of the reference frame 502 to changes in the orientation of the edge vectors 604, as discussed above. Thus, every time the sensor module 250 is moved and its reference frame 502 is reoriented, the edge vectors 604 will be reoriented to the same extent as the reference frame 502. In this way, once calibrated, the monitoring system 300 can always keep track of the orientation of the edges 606 of the sensor module 250.

Though calibration of the tool orientation vector 504 is described above as occurring before calibration of the edge vectors 604, in some examples, the order may be reversed. Though omitted from FIGS. 6a-6b for the sake of simplicity and explanation, the sensor module 250 may keep track of the tool orientation vector 504 when calibrating the edge vectors 604 during block 402. Likewise, though omitted from FIGS. 5a-5c for the sake of simplicity and explanation, the sensor module 250 may keep track of the edge vectors 604 when calibrating the tool orientation vector 504 during block 402.

In the example of FIG. 4, the technique monitoring process 400 proceeds from block 402 to block 404, where the processing circuitry determines whether the technique monitoring system 300 has been calibrated to recognize an orientation of a joint 120 of a workpiece(s) 122 on which is to be operated. In some examples, the technique monitoring system 300 may need information about the orientation of the joint 120 to determine certain welding technique parameter values. Thus, block 4040 may ensure technique monitoring process 400 has information about the joint 120 before proceeding further, to ensure future blocks can determine the technique parameter values.

In the example of FIG. 4, the technique monitoring process 400 proceeds to block 426 (discussed further below) if the processing circuitry determines that the technique monitoring system 300 has already been calibrated to recognize the orientation of the joint 120 of the workpiece(s) 122. As shown, the technique monitoring process 400 proceeds to block 406 if the processing circuitry determines that the technique monitoring system 300 has not yet been calibrated to recognize the orientation of the joint 120 of the workpiece(s) 122.

At block 406, the processing circuitry prompts the operator 110 (e.g., via the monitoring UI 314, module I/O devices 264, and/or mount I/O devices 224) to calibrate the technique monitoring system 300 with information about the joint 120 of the workpiece(s) 122. In some examples, the processing circuitry may prompt the operator 110 to first dismount the sensor module 250 from the sensor mount 202. In some examples, the processing circuitry may analyze data detected by the mount sensor(s) 228 to ensure the sensor module 250 has been dismounted, and/or only allow calibration of the joint 120 if the sensor module 250 has indeed been dismounted from the sensor mount 202.

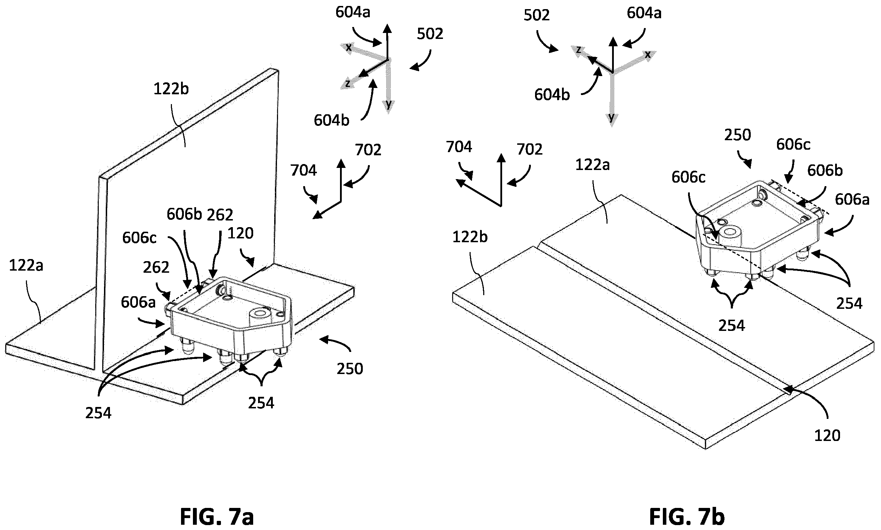

In some examples, the processing circuitry may prompt the operator 110 to place the (e.g., dismounted) sensor module 250 against the workpiece 122 such that the front edge 606b (and/or protruding edge 606c) is approximately parallel to the joint 120, and the standing edge 606a is approximately perpendicular to the joint 120. Once correctly positioned, the operator 110 may provide a calibration input at block 408 (e.g., via the monitoring UI 314, module I/O devices 264, and/or mount I/O devices 224) indicating that the sensor module 250 is properly positioned. In response to the calibration input, the processing circuitry may determine and/or record (at block 410) a first joint characteristic vector (e.g., base plate perpendicular vector 702) parallel to the first edge vector 604a (and/or standing edge 606a). At the same time, the processing circuitry may also determine and/or record a second joint characteristic vector (e.g., joint orientation vector 704) parallel to the second edge vector 604b (and/or front edge 606b and/or protruding edge(s) 606c) (see e.g., FIGS. 7a-7b).

In some examples, the processing circuitry may further determine and/or record a third joint characteristic vector (e.g., base plate surface vector) as being parallel to a third edge (e.g., formed at the intersection of the bottom wall 258a and a sidewall 258c). In some examples, the processing circuitry may determine and/or record the base plate surface vector as being perpendicular to both the base plate perpendicular vector 702 and joint orientation vector 704. In some examples, the processing circuitry may determine/record the base plate perpendicular vector 702 as being perpendicular to the base plate surface vector and the joint orientation vector 704 (or determine/record the joint orientation vector 704 as being perpendicular to the base plate surface vector and the base plate perpendicular vector 702).

In some examples, the processing circuitry may further determine and/or record a travel direction at block 410. For example, the operator 110 may move the sensor module in either direction along the joint 120, and the processing circuitry may determine the direction of movement based on (e.g., acceleration) data detected by the IMU(s) 276 of the sensor module 250. In some examples, the ball bearing caps 263 of the protruding arms 262 and/or protruding legs 254 may facilitate movement of the sensor module 250 along the surfaces of the workpieces 122.

In some examples, the operator 110 may continuously provide an input (e.g., via the monitoring UI 314, module I/O devices 264, and/or mount I/O devices 224) while moving the sensor module 250. In some examples, the operator 110 may instead provide an input before and after the movement. In some examples, the operator 110 may simply provide an input indicating a travel direction.

Unlike the tool orientation vector 504 and edge vectors 604, in some examples, the joint orientation vector 704 and/or base plate perpendicular vector 702 may be calibrated/recorded in absolute terms, rather than relative to the reference frame 502 of the sensor module 250. In such examples, the orientation of the joint orientation vector 704 and/or base plate perpendicular vector 702 will stay the same, even when the orientation of the sensor module 250 (and/or reference frame 502) changes. However, the edge vectors 604 used to calibrate the joint orientation vector 704 and/or base plate perpendicular vector 702 are recorded (and tracked) relative to the reference frame 502. In some examples, one or more additional joint characteristic vectors (e.g., a base plate surface vector) may additionally be calibrated/recorded.

FIGS. 7a-7b show example depictions of the sensor module 250 positioned with the front edge 606b parallel to a joint 120, such as might be proper for calibration of the joint orientation vector 704 and base plate perpendicular vector 702. In the example of FIG. 7a, joint 120 is a Tee joint. As shown, the sensor module 250 is positioned/oriented such that the ends of the protruding arms 262 abut the workpiece 122b, and the ends of the longer protruding legs 254 abut the workpiece 122a (thereby allowing the sensor module 250 to stand on workpiece 122a). Though the shorter protruding legs 254 are shown hanging off the edge of the workpiece 122a rather than making contact, in some examples, the sensor module 250 may be appropriately weighted such that the sensor module 250 remains standing/stable.

In the example of FIG. 7b, the joint 120 is a butt joint. The sensor module 250 is shown with the ends of the shorter protruding legs 254 abutting the workpiece 122a, and the ends of the longer protruding legs 254 abutting a surface on which the workpiece 122a sits (e.g., a table - not shown), thereby allowing the sensor module 250 to stand (e.g., on the table). As shown, some of the longer protruding legs 254 (e.g., those closest to the shorter protruding legs 254) also abut the workpiece 122a on the sides of the protruding legs 254 (e.g., thus preventing/resisting the sensor module 250 from moving farther towards the joint 120). In some examples, the protruding edge 606c of the sensor module 250 may also be parallel to the alignment of (and/or an imaginary line connecting) points on the periphery of the sides of the protruding legs 254 abutting the workpiece 122.

In the examples of FIGS. 7a-7b, both the front edge 606b, protruding edge 606c, and second edge vector 604b are parallel to the joint 120. As shown, the processing circuitry has recorded the joint orientation vector 704 as also being parallel to the front edge 606b, protruding edge 606c, second edge vector 604b, and joint 120. The processing circuitry has also recorded the base plate perpendicular vector 702 as being perpendicular to the joint 120, and parallel to both the standing edge 606a and first edge vector 606a. The base plate perpendicular vector 702 and joint orientation vector 704 have further been recorded independent of the reference frame 502 of the sensor module 250.

While FIGS. 7a-7b show Tee and butt joints 120, in some examples, the sensor module 250 may be similarly used to calibrate joint characteristic vectors for other types of joints 120 as well (e.g., corner joints, lap joints, edge joints, etc.). While the joints 120 depicted in FIGS. 7a-7b appear to be generally horizontal and/or sloped horizontally, in some examples, the sensor module 250 may be similarly used to calibrate joint characteristic vectors for vertical and/or vertically sloped joints at block 410.

In the example of FIG. 4, the technique monitoring process 400 proceeds from block 410 to block 412, where the processing circuitry determines whether the sensor module 250 is mounted to the sensor mount 202. In some examples, the processing circuitry may make this determination at block 412 to check whether the processing circuitry should bother to provide feedback regarding welding technique. After all, if the sensor module 250 is not connected to the sensor mount 202, then the tracked orientation of the sensor module 250 will have no relation to the orientation of the welding-type tool 102, and thus will not be relevant to welding technique. In some examples, the processing circuitry determines whether the sensor module 250 is mounted to the sensor mount 202 based on data detected by the mount sensor(s) 228 (e.g., as discussed above).

In the example of FIG. 4, the technique monitoring process 400 proceeds from block 412 to block 414 if the processing circuitry determines that the sensor module 250 is not mounted to the sensor mount 202. At block 416, the processing circuitry takes measures to prevent a welding-type operation from occurring. For example, the processing circuitry may send a disable command to the welding-type equipment (e.g., via module communication circuitry 286). In response to the disable command, the welding-type equipment 106 may cease sending wire, shielding gas, and/or welding-type power to the welding-type tool 102. As another example, the processing circuitry may send a disable command to the sensor mount 202 (e.g., via module communication circuitry 286), and the sensor mount 202 may disable the ability of the welding-type tool 102 to send trigger signals to the welding-type equipment. As shown, the technique monitoring process 400 then proceeds from block 414 to block 416, where the processing circuitry additionally prompts the operator 110 (e.g., via the monitoring UI 314, module I/O devices 264, and/or mount I/O devices 224) to attach the sensor module 250 to the sensor mount 202.

While shown as occurring at a certain point in the technique monitoring process 400, in some examples, blocks 412-416 may occur at other times. For example, the processing circuitry may check whether the sensor module 250 is mounted to the sensor mount 202 before allowing calibration of the edge vectors 604 and/or joint characteristic vectors (e.g., at blocks 402 and 410), which may prompt the occurrence of blocks 412-416. As shown, the technique monitoring process 400 proceeds to block 424 (discussed below) after block 416.

In the example of FIG. 4, the technique monitoring process 400 proceeds from block 412 to block 418 if the processing circuitry determines that the sensor module 250 is mounted to the sensor mount 202. At block 418, the processing circuitry tracks the orientation and/or movement of the welding-type tool 102 using data from the sensor module 250. In some examples, the rotational orientation of the welding-type tool 102 may be tracked in real time using the sensor reference frame 502, tool orientation vector 504, and IMU(s) 276, as discussed above.

In some examples, the linear movements (e.g., speed and direction) of the welding-type tool 102 may also be tracked by analyzing linear acceleration measurements of the accelerometer(s) of the IMU(s) 276. In some examples, movement in a direction parallel to the joint orientation vector 606 may be assumed to be in a correct direction. Thus, in some examples, if the joint orientation vector 606 is known, speed of movement in a direction parallel to the joint orientation vector 606 may be considered travel speed. In some examples, a calibration procedure may be used to inform the processing circuitry of the correct travel direction, as discussed above.

In the example of FIG. 4, the technique monitoring process 400 proceeds from block 418 to block 420 where real time welding technique parameter values may be determined based on the tracked orientation(s) and/or movement(s) of the welding-type tool 102. For example, the processing circuitry may determine travel angle and/or work angle parameter values based on an angle between the tool orientation vector 504 and the joint orientation vector 606, and an angle between the tool orientation vector 504 and the base plate perpendicular vector 604 (e.g., applied to certain trigonometric functions).

In examples where travel angle is determined, the technique monitoring process 400 may use the travel direction in conjunction with travel angle to determine whether welding-type operation is a push or drag operation (e.g., based on whether tool orientation vector 504 and travel direction are in the same, or a different, direction). In some examples, a positive travel angle may be considered a push, while a negative travel angle is considered a drag. In some examples, movement of the welding-type tool 102 in a plane defined by the joint orientation vector 606 and a base plate surface vector (e.g., perpendicular to both the joint orientation vector 606 and base plate perpendicular vector 604) may be analyzed to determine weave pattern characteristics (e.g., frequency, weave width, dwell time, etc.).

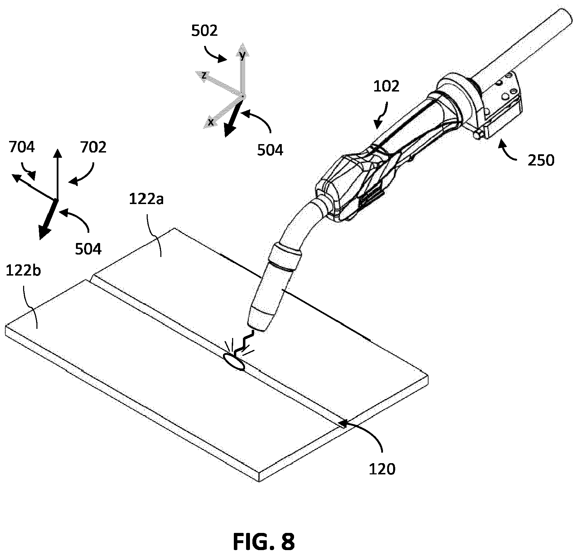

FIG. 8 shows an example depiction of a welding-type tool 102 during a welding-type operation, while the welding technique monitoring system 300 tracks the orientation of the welding-type tool 102 and determines technique parameters (e.g., blocks 418-420). As shown, the sensor module 250 is mounted to the sensor mount 202. The reference frame 502 of the sensor module 250 is also shown oriented in accordance with the orientation of the sensor module 250. Further, the tool orientation vector 504 is shown relative to the reference frame 502. While depictions of the edge vectors 604 are omitted (as they are no longer relevant), FIG. 8 does show the joint orientation vector 606 and base plate perpendicular vector 604.

In the example of FIG. 8, two depictions of the tool orientation vector 504 are shown. A first depiction of the tool orientation vector 504 is shown relative to the reference frame 502 of the sensor module 250. The first depiction of the tool orientation vector 504 illustrates that the tool orientation vector 504 is still tracked relative to the reference frame of the sensor module 250.

In the example of FIG. 8, a second depiction of the tool orientation vector 504 is shown independent of the reference frame 502 of the sensor module 250. The second depiction of the tool orientation vector 504 is instead shown superimposed on the joint orientation vector 606 and base plate perpendicular vector 604, which are also independent of the reference frame 502 of the sensor module 250. When superimposed on the joint orientation vector 606 and base plate perpendicular vector 604, the tool orientation vector 504 forms angles with respect to the joint orientation vector 606 and base plate perpendicular vector 604. The angles formed between the tool orientation vector 504 and joint orientation vector 606, and between the tool orientation vector 504 and base plate perpendicular vector 604, can be used to determine welding technique parameter values (as discussed above), and/or provide feedback with respect to the same (as discussed below).

In the example of FIG. 4, the technique monitoring process 400 proceeds from block 420 to block 422, where the processing circuitry provides (e.g., real time) feedback. In some examples, the real time feedback may be provided to the operator 110 via the monitoring UI 314, module I/O devices 264, and/or mount I/O devices 224. In some examples, the feedback may be in the form of one or more text messages, images, videos, sounds, vibrations, and/or appropriate outputs. In some examples, the feedback may identify one or more of the welding technique parameter values and/or weave pattern characteristics determined at block 414. In some examples, the feedback may identify one or more welding, sensor, and/or operation parameter values.

In some examples, the feedback may be with respect to that particular instantaneous moment in time, and/or with respect to a given time period. In some examples, the processing circuitry may compare the determined parameter values (and/or weave pattern characteristic values) to expected and/or target welding technique parameter (and/or weave pattern characteristic) values, and/or provide feedback regarding the comparison. In some examples, the processing circuitry might provide different feedback (e.g., red vs. green colors, chime vs. alarm sounds, etc.) depending on whether the determined values are within, or outside of, a threshold range of the expected/target values. In some examples, the processing circuitry may further determine one or more ratings, grades, and/or scores based on the comparison of the determined values to the expected/target values, and provide feedback with respect thereto.

In some examples, the processing circuitry may further record in memory and/or transmit (e.g., to a remote server) parameter/characteristic values, and/or relative feedback. For example, the processing circuitry may send the information to the welding-type equipment 106. In some examples, the welding-type equipment 106 may use the information to adjust welding parameters. In some examples, the processing circuitry may disable the welding-type equipment 106, send a message to a supervisor, lock the workpiece(s) 122 (e.g., via a clamp or fixture), and/or take other appropriate action in response to a technique grade, rating, and/or score below a threshold (e.g., stored in memory).

In some examples, the processing circuitry may further track when a (e.g., live or simulated) welding-type operation is occurring (e.g., via measurements of the current sensor 278, communication with the welding helmet 104, and/or communication with welding-type equipment 106) and use this information when determining parameter/characteristic values. For example, the processing circuitry may only determine technique data and/or weave pattern characteristics when a welding-type operation is occurring. As another example, the processing circuitry may only provide feedback and/or determine a grade, rating, and/or score when an actual (or simulated) welding-type operation is occurring. As another example, the processing circuitry may record and/or output information about whether the welding-type operation is occurring when recording and/or outputting the technique data and/or weave pattern characteristics (and/or associated feedback).

In some examples, the processing circuitry may be able to continuously provide real time determination and feedback of at least some welding parameter values at block 422. In the example of FIG. 4, if there is no repositioning of, and/or changes to, the sensor module 250 (e.g., at blocks 412 and/or 424) and/or joint 120 (e.g., at block 426), the technique monitoring process 400 may loop back to blocks 418-422 and the processing circuitry may continue to provide feedback. Though not shown, in some examples, the technique monitoring process 400 may be terminated at any time by appropriate input from the operator 110.

In the example of FIG. 4, at block 424, the processing circuitry checks to see if there has been a change in the sensor module 250 that warrants recalibration. In some examples, such a change may be determined to occur if there has been more than a threshold amount drift of one or more of the sensors of the IMU 276. In some examples where multiple IMUs 276 are used, such a change may be determined to occur if there has been more than a threshold amount drift of one or more sensors of more than a threshold number of the IMUs 276. In some examples, a change warranting recalibration may be determined to occur if more than a threshold amount of time has passed since the sensor module 250 was set and/or reset at block 420 (or joint calibration performed at block 410), which might be correlated with substantial drift. As shown, the technique monitoring process 400 proceeds to block 426 after block 424.

In the example of FIG. 4, the processing circuitry checks whether there has been a significant enough change in the joint 120 to warrant recalibration at block 426. In some examples, the technique monitoring process 400 may rely on the operator 110 to provide this information (e.g., via the monitoring UI 314, module I/O devices 264, and/or mount I/O devices 224). For example, if the operator 110 finishes one welding-type operation, and is set to begin a different welding-type operation with one or more different workpieces 122 and/or one or more different joints 120, then the operator 110 may provide an input to let the processing circuitry know that the prior joint calibrations are no longer applicable. In such an example, the technique monitoring process 400 would return to block 404. However, if, for example, the operator 110 is continuing with the same welding-type operation, or even starting a new welding-type operation where the joint 120 is in the same orientation as the previous welding-type operation, then the technique monitoring process 400 may continue with no additional calibrations necessary.

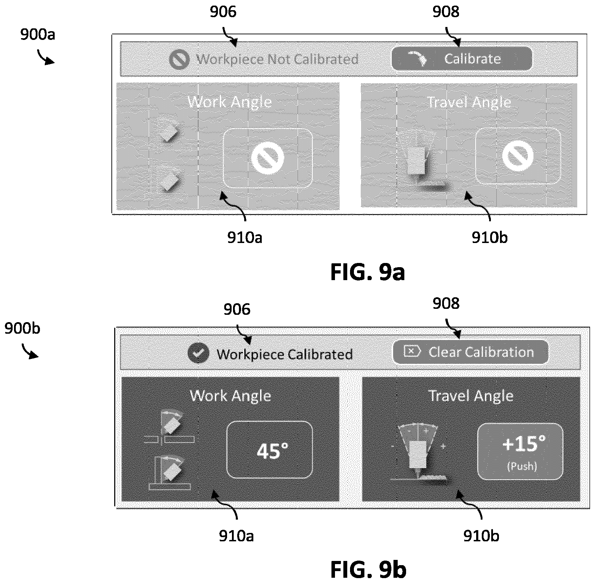

FIGS. 9a-9b show examples of graphical user interfaces (GUIs) 900 that might be shown during the technique monitoring process 400 via the display screen(s) of the module I/O devices 264 and/or monitoring UI 314. In the example of FIGS. 9a-9b, the GUIs 900 show a calibration status message 906 next to a calibration button 908. In the GUI 900a of FIG. 7a, the calibration status message 906 indicates that the welding technique monitoring system 300 has yet to be calibrated with information regarding the workpiece 122 and/or joint 120

(e.g., the joint characteristic vectors). The calibration button 908 next to the calibration status message 906 provides a means through which an operator 110 could provide an input to induce full calibration (e.g., at blocks 408-410).

In the GUI 900b of FIG. 9b, the calibration status message 906 indicates that the welding technique monitoring system 300 has been calibrated to be able to recognize both joint characteristic vectors. The calibration button 908 next to the calibration status message 906 provides an input through which an operator 110 could clear the current calibration, such as if, for example, the operator 110 was starting a new welding-type operation with a different joint position (e.g., block 420).

While not shown, in some examples, the calibration status message 906 might also indicate a threshold amount of time had passed since calibration, indicate a time until such a threshold would pass, and/or indicate a confidence level of the feedback given the time since calibration (e.g., due to drift of the IMU(s) 276). In some examples, the calibration button 908 may be unavailable as a means through which an operator 110 could provide an input to induce calibration (e.g., at blocks 408-410), such as for example, if the sensor module 250 is mounted to the sensor mount 202. In some examples where the calibration button 908 is unavailable, the calibration button 908 may be grayed out and/or include a notification indicating why the calibration button 908 is unavailable.

In the examples of FIGS. 9a-9b, each GUI 900 provides two feedback outputs 910: feedback output 910a showing the current work angle determined by the technique monitoring process 400, and feedback output 910b showing the current travel angle determined by the technique monitoring process 400. In the example of FIG. 9a, both feedback outputs are shown grayed out with a prohibition symbol to indicate that the technique monitoring process 400 cannot provide feedback for these technique parameters (e.g., because the technique monitoring process 400 has not been calibrated).

In the GUI 900b shown in FIG. 9b, both feedback outputs 910 show values detected/determined during the technique monitoring process 400, as made possible by calibration during the technique monitoring process 400. Additionally, the feedback output 910b provides feedback that the welding-type operation is a push (rather than pull) operation.

While described as feedback outputs 910, in some examples, the feedback outputs 910 may alternatively, or additionally, be means through which input can be provided. For example, selection of the feedback outputs 910 may change the format of the feedback being output (e.g., from numerical, to chart/graph, to numerical and chart/graph, etc.). While only travel angle and weld angle are shown in the feedback outputs 910, in some examples other parameter values (and/or weave pattern characteristic values) may be shown.

The example tool based welding technique monitoring system 300 provides an inexpensive, robust, and portable solution for tracking an orientation of a welding-type tool 102, and providing feedback as to welding technique. The system 300 requires no sensors apart from a simple and/or relatively inexpensive sensor module 250 that can travel with the welding-type tool 102. The sensor module 250 can be detached for safe storage and/or use with another welding-type tool. The detachability of the sensor module 250 also allows the technique monitoring system to support horizontal, vertical, and sloped joints using simple calibration procedures. Additionally, calibration of the system 300 can be accomplished with fast, simple, intuitive calibration techniques.

The present methods and/or systems may be realized in hardware, software, or a combination of hardware and software. The present methods and/or systems may be realized in a centralized fashion in at least one computing system, or in a distributed fashion where different elements are spread across several interconnected computing or cloud systems. Any kind of computing system or other apparatus adapted for carrying out the methods described herein is suited. A typical combination of hardware and software may be a general-purpose computing system with a program or other code that, when being loaded and executed, controls the computing system such that it carries out the methods described herein. Another typical implementation may comprise an application specific integrated circuit or chip. Some implementations may comprise a non-transitory machine-readable (e.g., computer readable) medium (e.g., FLASH drive, optical disk, magnetic storage disk, or the like) having stored thereon one or more lines of code executable by a machine, thereby causing the machine to perform processes as described herein.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. Therefore, it is intended that the present method and/or system not be limited to the particular implementations disclosed, but that the present method and/or system will include all implementations falling within the scope of the appended claims.

As used herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z".

As utilized herein, the terms "e.g.," and "for example" set off lists of one or more non-limiting examples, instances, or illustrations.

As used herein, the terms "coupled," "coupled to," and "coupled with," each mean a structural and/or electrical connection, whether attached, affixed, connected, joined, fastened, linked, and/or otherwise secured. As used herein, the term "attach" means to affix, couple, connect, join, fasten, link, and/or otherwise secure. As used herein, the term "connect" means to attach, affix, couple, join, fasten, link, and/or otherwise secure.

As used herein the terms "circuits" and "circuitry" refer to physical electronic components (i.e., hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, circuitry is "operable" and/or "configured" to perform a function whenever the circuitry comprises the necessary hardware and/or code (if any is necessary) to perform the function, regardless of whether performance of the function is disabled or enabled (e.g., by a user-configurable setting, factory trim, etc.).

As used herein, a control circuit may include digital and/or analog circuitry, discrete and/or integrated circuitry, microprocessors, DSPs, etc., software, hardware and/or firmware, located on one or more boards, that form part or all of a controller, and/or are used to control a welding process, and/or a device such as a power source or wire feeder.

As used herein, the term "processor" means processing devices, apparatus, programs, circuits, components, systems, and subsystems, whether implemented in hardware, tangibly embodied software, or both, and whether or not it is programmable. The term "processor" as used herein includes, but is not limited to, one or more computing devices, hardwired circuits, signal-modifying devices and systems, devices and machines for controlling systems, central processing units, programmable devices and systems, field-programmable gate arrays, application-specific integrated circuits, systems on a chip, systems comprising discrete elements and/or circuits, state machines, virtual machines, data processors, processing facilities, and combinations of any of the foregoing. The processor may be, for example, any type of general purpose microprocessor or microcontroller, a digital signal processing (DSP) processor, an application-specific integrated circuit (ASIC), a graphic processing unit (GPU), a reduced instruction set computer (RISC) processor with an advanced RISC machine (ARM) core, etc. The processor may be coupled to, and/or integrated with a memory device.

As used, herein, the term "memory" and/or "memory device" means computer hardware or circuitry to store information for use by a processor and/or other digital device. The memory and/or memory device can be any suitable type of computer memory or any other type of electronic storage medium, such as, for example, read-only memory (ROM), random access memory (RAM), cache memory, compact disc read-only memory (CDROM), electro-optical memory, magneto-optical memory, programmable read-only memory (PROM), erasable programmable read-only memory (EPROM), electrically-erasable programmable read-only memory (EEPROM), a computer-readable medium, or the like. Memory can include, for example, a non-transitory memory, a non-transitory processor readable medium, a non-transitory computer readable medium, non-volatile memory, dynamic RAM (DRAM), volatile memory, ferroelectric RAM (FRAM), first-in-first-out (FIFO) memory, last-in-first-out (LIFO) memory, stack memory, non-volatile RAM (NVRAM), static RAM (SRAM), a cache, a buffer, a semiconductor memory, a magnetic memory, an optical memory, a flash memory, a flash card, a compact flash card, memory cards, secure digital memory cards, a microcard, a minicard, an expansion card, a smart card, a memory stick, a multimedia card, a picture card, flash storage, a subscriber identity module (SIM) card, a hard drive (HDD), a solid state drive (SSD), etc. The memory can be configured to store code, instructions, applications, software, firmware and/or data, and may be external, internal, or both with respect to the processor.

The term "power" is used throughout this specification for convenience, but also includes related measures such as energy, current, voltage, and enthalpy. For example, controlling "power" may involve controlling voltage, current, energy, and/or enthalpy, and/or controlling based on "power" may involve controlling based on voltage, current, energy, and/or enthalpy.

As used herein, welding-type refers to actual live, and/or simulated, welding (including laser welding and/or hot wire welding), cladding (including laser cladding), brazing, plasma cutting, induction heating, carbon arc cutting or gouging, hot wire preheating, and/or resistive preheating.

As used herein, a welding-type tool refers to a tool suitable for and/or capable of actual live, and/or simulated, welding (including laser welding and/or hot wire welding), cladding (including laser cladding), brazing, plasma cutting, induction heating, carbon arc cutting or gouging, hot wire preheating, and/or resistive preheating.

As used herein, welding-type power refers to power suitable for actual live welding (including laser welding and/or hot wire welding), cladding (including laser cladding), brazing, plasma cutting, induction heating, carbon arc cutting or gouging, hot wire preheating, and/or resistive preheating.

As used herein, a welding-type power supply and/or welding-type power source refers to a device capable of, when input power is applied thereto, supplying output power suitable for actual live welding (including laser welding and/or hot wire welding), cladding (including laser cladding), brazing, plasma cutting, induction heating, carbon arc cutting or gouging, hot wire preheating, and/or resistive preheating; including but not limited to transformer-rectifiers, inverters, converters, resonant power supplies, quasi-resonant power supplies, switch-mode power supplies, etc., as well as control circuitry and other ancillary circuitry associated therewith.

As used herein, disable may mean deactivate, incapacitate, and/or make inoperative. As used herein, enable may mean activate and/or make operational.

Disabling of circuitry, actuators, and/or other hardware may be done via hardware, software (including firmware), or a combination of hardware and software, and may include physical disconnection, de-energization, and/or a software control that restricts commands from being implemented to activate the circuitry, actuators, and/or other hardware. Similarly, enabling of circuitry, actuators, and/or other hardware may be done via hardware, software (including firmware), or a combination of hardware and software, using the same mechanisms used for disabling.

As used herein, real-time means occurring immediately while allowing for processing time, to create the impression of immediacy to a user.

Certain embodiments of the invention are described in the following numbered clauses:
Clause 1. A method, comprising:
   determining, via processing circuitry, a first joint characteristic vector and a second joint characteristic vector based on first sensor data detected during a first time period by a sensor module that is attachable to, and detachable from, a welding-type tool, the sensor module being detached from the welding-type tool during the first time period;
   tracking, during a second time period, via the processing circuitry, a tool orientation of the welding-type tool using second sensor data detected by the sensor module during the second time period, the sensor module being attached to the welding-type tool during the second time period; and
   identifying, via the processing circuitry, a welding technique parameter value based on the tool orientation of the welding-type tool and the first or second joint characteristic vector.
Clause 2. The method of clause 1, wherein determining the first joint characteristic vector and the second joint characteristic vector comprises:
   identifying the first joint characteristic vector as being parallel to a first edge of a housing of the sensor module in response to a calibration input; and
   identifying the second joint characteristic vector as being parallel to a second edge of the housing in response to the calibration input.
Clause 3. The method of clause 2, further comprising identifying the second joint characteristic vector as extending in a first direction parallel to the second edge or in a second direction, opposite the first direction, based on an input received via a user interface or sensor data detected by the sensor module during a third time period.
Clause 4. The method of clause 2, wherein the sensor module comprises a first protrusion and a second protrusion extending from a wall of the housing, the second edge comprising a line extending between a first point on the periphery of the first protrusion and a second point on the periphery of the second protrusion.
Clause 5. The method of clause 4, wherein the first or second protrusion comprises a connector configured to connect with a complementary connector of a mounting device that is attached to the welding-type tool.
Clause 6. The method of clause 1, wherein the sensor module comprises a housing having a connector configured to connect with a complementary connector of a mounting device that is attached to, or integrated with, the welding-type tool, the sensor module being toollessly attachable to, and detachable from, the mounting device using the connection between the connector of the sensor module and the complementary connector of the mounting device.
Clause 7. The method of clause 6, wherein the sensor module comprises a rechargeable battery, and the mounting device comprises a battery recharger configured to recharge the rechargeable battery.
Clause 8. The method of clause 6, further comprising:
   determining, via the processing circuitry, whether the sensor module is attached to the mount of the welding-type tool based on mount data detected by a mount sensor of the sensor module or the mount, and
   in response to determining the sensor module is attached to the mount of the welding-type tool, providing feedback, via a user interface, based on the welding technique parameter value.
Clause 9. The method of clause 6, further comprising:
   determining, via the processing circuitry, whether the sensor module is attached to the mount of the welding-type tool based on mount data detected by a mount sensor of the sensor module or the mount, and
   preventing initiation of a welding-type operation in response to determining the sensor module is not attached to the mount of the welding-type tool.
Clause 10. The method of clause 1, wherein the welding technique parameter value comprises a work angle value or a travel angle value of the welding-type tool, the sensor module comprises an inertial measurement unit comprising an accelerometer, a gyroscope, or a magnetometer, and the sensor data comprises data detected by the inertial measurement unit.
Clause 11. A tool tracking system, comprising:
   a sensor module, comprising:
      a housing configured to be removably attached to a welding-type tool, and
      an inertial measurement unit (IMU) positioned within the housing; and
   a non-transitory computer readable medium comprising machine readable instructions which, when executed by a processor, cause the processor to:
      determine a first joint characteristic vector and a second joint characteristic vector based on first sensor data detected during a first time period by the sensor module, the sensor module being detached from the welding-type tool during the first time period,
      track, in real time during a second time period, a tool orientation of the welding-type tool using second sensor data detected by the sensor module during the second time period, the sensor module being attached to the welding-type tool during the second time period, and
      identify a welding technique parameter value based on the tool orientation of the welding-type tool and the first or second joint characteristic vector.
Clause 12. The system of clause 11, wherein determining the first joint characteristic vector and the second joint characteristic vector comprises:
   identifying the first j oint characteristic vector as being parallel to a first edge of a housing of the sensor module in response to a calibration input, and
   identifying the second joint characteristic vector as being parallel to a second edge of the housing in response to the calibration input.
Clause 13. The system of clause 12, wherein the non-transitory computer readable medium further comprises machine readable instructions which, when executed by a processor, cause the processor to identify the second joint characteristic vector as extending in a first direction parallel to the second edge or in a second direction, opposite the first direction, based on an input received via a user interface or sensor data detected by the sensor module during a third time period.
Clause 14. The system of clause 12, wherein the sensor module comprises a first protrusion and a second protrusion extending from a wall of the housing, the second edge comprising a line extending between a first point on the periphery of the first protrusion and a second point on the periphery of the second protrusion.
Clause 15. The system of clause 14, further comprising a sensor mount integrated with, or configured for attachment to, the welding-type tool, the first or second protrusion comprising a connector configured to connect with a complementary connector of the sensor mount.
Clause 16. The system of clause 11, further comprising sensor mount integrated with, or configured for attachment to, the welding-type tool, the sensor module comprising a housing having a connector configured to connect with a complementary connector of the mounting device, the sensor module being toollessly attachable to, and detachable from, the mounting device using the connection between the connector of the sensor module and the complementary connector of the mounting device.
Clause 17. The system of clause 16, wherein the sensor module comprises a rechargeable battery, and the sensor mount comprises a battery recharger configured to recharge the rechargeable battery.
Clause 18. The system of clause 16, wherein the sensor mount further comprises a mount sensor, and the non-transitory computer readable medium further comprises machine readable instructions which, when executed by a processor, cause the processor to:
   determine whether the sensor module is attached to the sensor mount based on mount data detected by the mount sensor, and
   in response to determining the sensor module is attached to the sensor mount, provide feedback, via a user interface, based on the welding technique parameter value.
Clause 19. The system of clause 18, wherein the non-transitory computer readable medium further comprises machine readable instructions which, when executed by a processor, cause the processor to prevent initiation of a welding-type operation in response to determining the sensor module is not attached to the sensor mount.
Clause 20. The system of clause 11, wherein the welding technique parameter value comprises a work angle value or a travel angle value of the welding-type tool, the inertial measurement unit comprises an accelerometer, a gyroscope, or a magnetometer, and the sensor data comprises data detected by the inertial measurement unit.

## Claims

1. A method, comprising:
determining, via processing circuitry, a first joint characteristic vector and a second joint characteristic vector based on first sensor data detected during a first time period by a sensor module that is attachable to, and detachable from, a welding-type tool, the sensor module being detached from the welding-type tool during the first time period;
tracking, during a second time period, via the processing circuitry, a tool orientation of the welding-type tool using second sensor data detected by the sensor module during the second time period, the sensor module being attached to the welding-type tool during the second time period; and
identifying, via the processing circuitry, a welding technique parameter value based on the tool orientation of the welding-type tool and the first or second joint characteristic vector.

2. The method of claim 1, wherein determining the first joint characteristic vector and the second joint characteristic vector comprises:
identifying the first joint characteristic vector as being parallel to a first edge of a housing of the sensor module in response to a calibration input; and
identifying the second joint characteristic vector as being parallel to a second edge of the housing in response to the calibration input.

3. The method of claim 2, further comprising identifying the second j oint characteristic vector as extending in a first direction parallel to the second edge or in a second direction, opposite the first direction, based on an input received via a user interface or sensor data detected by the sensor module during a third time period.

4. The method of claim 2, wherein the sensor module comprises a first protrusion and a second protrusion extending from a wall of the housing, the second edge comprising a line extending between a first point on the periphery of the first protrusion and a second point on the periphery of the second protrusion and optionally wherein the first or second protrusion comprises a connector configured to connect with a complementary connector of a mounting device that is attached to the welding-type tool.

5. The method of claim 1, wherein the sensor module comprises a housing having a connector configured to connect with a complementary connector of a mounting device that is attached to, or integrated with, the welding-type tool, the sensor module being toollessly attachable to, and detachable from, the mounting device using the connection between the connector of the sensor module and the complementary connector of the mounting device and optionally wherein the sensor module comprises a rechargeable battery, and the mounting device comprises a battery recharger configured to recharge the rechargeable battery or further comprising:
determining, via the processing circuitry, whether the sensor module is attached to the mount of the welding-type tool based on mount data detected by a mount sensor of the sensor module or the mount, and
in response to determining the sensor module is attached to the mount of the welding-type tool, providing feedback, via a user interface, based on the welding technique parameter value or further comprising:
determining, via the processing circuitry, whether the sensor module is attached to the mount of the welding-type tool based on mount data detected by a mount sensor of the sensor module or the mount, and
preventing initiation of a welding-type operation in response to determining the sensor module is not attached to the mount of the welding-type tool.

6. The method of claim 1, wherein the welding technique parameter value comprises a work angle value or a travel angle value of the welding-type tool, the sensor module comprises an inertial measurement unit comprising an accelerometer, a gyroscope, or a magnetometer, and the sensor data comprises data detected by the inertial measurement unit.

7. A tool tracking system, comprising:
a sensor module, comprising:
a housing configured to be removably attached to a welding-type tool, and
an inertial measurement unit (IMU) positioned within the housing; and
a non-transitory computer readable medium comprising machine readable instructions which, when executed by a processor, cause the processor to:
determine a first joint characteristic vector and a second joint characteristic vector based on first sensor data detected during a first time period by the sensor module, the sensor module being detached from the welding-type tool during the first time period,
track, in real time during a second time period, a tool orientation of the welding-type tool using second sensor data detected by the sensor module during the second time period, the sensor module being attached to the welding-type tool during the second time period, and
identify a welding technique parameter value based on the tool orientation of the welding-type tool and the first or second joint characteristic vector.

8. The system of claim 7, wherein determining the first joint characteristic vector and the second joint characteristic vector comprises:
identifying the first joint characteristic vector as being parallel to a first edge of a housing of the sensor module in response to a calibration input, and
identifying the second joint characteristic vector as being parallel to a second edge of the housing in response to the calibration input.

9. The system of claim 8, wherein the non-transitory computer readable medium further comprises machine readable instructions which, when executed by a processor, cause the processor to identify the second joint characteristic vector as extending in a first direction parallel to the second edge or in a second direction, opposite the first direction, based on an input received via a user interface or sensor data detected by the sensor module during a third time period.

10. The system of claim 8, wherein the sensor module comprises a first protrusion and a second protrusion extending from a wall of the housing, the second edge comprising a line extending between a first point on the periphery of the first protrusion and a second point on the periphery of the second protrusion and optionally further comprising a sensor mount integrated with, or configured for attachment to, the welding-type tool, the first or second protrusion comprising a connector configured to connect with a complementary connector of the sensor mount.

11. The system of claim 7, further comprising sensor mount integrated with, or configured for attachment to, the welding-type tool, the sensor module comprising a housing having a connector configured to connect with a complementary connector of the mounting device, the sensor module being toollessly attachable to, and detachable from, the mounting device using the connection between the connector of the sensor module and the complementary connector of the mounting device.

12. The system of claim 11, wherein the sensor module comprises a rechargeable battery, and the sensor mount comprises a battery recharger configured to recharge the rechargeable battery.

13. The system of claim 11, wherein the sensor mount further comprises a mount sensor, and the non-transitory computer readable medium further comprises machine readable instructions which, when executed by a processor, cause the processor to:
determine whether the sensor module is attached to the sensor mount based on mount data detected by the mount sensor, and
in response to determining the sensor module is attached to the sensor mount, provide feedback, via a user interface, based on the welding technique parameter value.

14. The system of claim 13, wherein the non-transitory computer readable medium further comprises machine readable instructions which, when executed by a processor, cause the processor to prevent initiation of a welding-type operation in response to determining the sensor module is not attached to the sensor mount.

15. The system of claim 7, wherein the welding technique parameter value comprises a work angle value or a travel angle value of the welding-type tool, the inertial measurement unit comprises an accelerometer, a gyroscope, or a magnetometer, and the sensor data comprises data detected by the inertial measurement unit.
